# EUROPÄISCHE PATENTSCHRIFT

(11) **EP 3 622 621 B1**
(45) Veröffentlichungstag und Bekanntmachung des Hinweises auf die Patenterteilung: **26.05.2021**
(21) Anmeldenummer: 17736655.6
(22) Anmeldetag: 05.07.2017
(51) Int. Cl.: H02M 7/483

(54) **MULTILEVELSTROMRICHTER**
MULTILEVEL POWER CONVERTER
ONDULEUR À PLUSIEURS NIVEAUX

(43) Veröffentlichungstag der Anmeldung: 18.03.2020
(73) Patentinhaber: Siemens Energy Global GmbH & Co. KG, 81739 München (DE)
(72) Erfinder: HUSSENNETHER, Volker, 90482 Nürnberg (DE); CHAUDHRY, Adnan, 91052 Erlangen (DE); GAMBACH, Herbert, 91080 Uttenreuth (DE); SCHUSTER, Roland, 91056 Erlangen (DE); WESTERWELLER, Thomas, 96135 Stegaurach (DE)
(86) Internationale Anmeldenummer: PCT/EP2017/066805
(87) Internationale Veröffentlichungsnummer: WO 2019/007502

(56) Entgegenhaltungen:
- WO-A1-2016/177398
- WO-A1-2017/029327
- US-A1- 2013 308 235
- US-A1- 2017 077 834
- DU SIXING ET AL: "An Active Cross-Connected Modular Multilevel Converter (AC-MMC) for a Medium-Voltage Motor Drive", IEEE TRANSACTIONS ON INDUSTRIAL ELECTRONICS, IEEE SERVICE CENTER, PISCATAWAY, NJ, USA, Bd. 63, Nr. 8, 1. August 2016 (2016-08-01) , Seiten 4707-4717, XP011616265, ISSN: 0278-0046, DOI: 10.1109/TIE.2016.2547875 [gefunden am 2016-07-08]
- NAMI ALIREZA ET AL: "Modular Multilevel Converters for HVDC Applications: Review on Converter Cells and Functionalities", IEEE TRANSACTIONS ON POWER ELECTRONICS, INSTITUTE OF ELECTRICAL AND ELECTRONICS ENGINEERS, USA, Bd. 30, Nr. 1, 1. Januar 2015 (2015-01-01) , Seiten 18-36, XP011557523, ISSN: 0885-8993, DOI: 10.1109/TPEL.2014.2327641 [gefunden am 2014-08-26]

## Beschreibung

Die Erfindung betrifft einen Multilevelstromrichter mit einem Phasenmodul, welches zwischen einem ersten Gleichspannungsanschluss und einem zweiten Gleichspannungsanschluss des Multilevelstromrichters angeordnet ist und welches eine Vielzahl von Modulen aufweist, wobei das Phasenmodul einen ersten Phasenmodulzweig aufweist, der mit dem ersten Gleichspannungsanschluss verbunden ist, und einen zweiten Phasenmodulzweig aufweist, der mit dem zweiten Gleichspannungsanschluss verbunden ist, und wobei die Module jeweils mindestens zwei elektronische Schaltelemente und einen elektrischen Energiespeicher aufweisen, und wobei der Multilevelstromrichter drei derartige Phasenmodule aufweist.

Weiterhin betrifft die Erfindung ein Verfahren zum Betreiben eines Multilevelstromrichters. Ein Multilevelstromrichter (der auch als modularer Multilevelstromrichter bezeichnet wird) ist eine leistungselektronische Schaltung zum Umwandeln von elektrischer Energie. Mit einem Multilevelstromrichter kann beispielsweise Wechselstrom in Gleichstrom oder Gleichstrom in Wechselstrom umgewandelt werden. Ein Multilevelstromrichter weist eine Vielzahl von gleichartigen Modulen auf, welche elektrisch in Reihe geschaltet sind. Durch die elektrische Reihenschaltung der Module lassen sich hohe Ausgangsspannungen erreichen. Ein Multilevelstromrichter ist einfach an unterschiedliche Spannungen anpassbar (skalierbar) und eine gewünschte Ausgangsspannung kann relativ genau erzeugt werden. Ein Multilevelstromrichter kann vorteilhafterweise im Hochspannungsbereich eingesetzt werden, beispielsweise als Stromrichter bei einer Hochspannungs-Gleichstrom-Übertragungsanlage oder als Blindleistungskompensationsanlage.

Die Anzahl der Module in der elektrischen Reihenschaltung ist so zu wählen, dass der Multilevelstromrichter die benötigte Ausgangsspannung erzeugen kann. Außerdem muss die Anzahl der Module in der Reihenschaltung aber auch so groß sein, dass bei allen Betriebszuständen des Multilevelstromrichters die an den Modulen anliegende Spannung die maximal zulässige Modulspannung nicht überschreitet. Daher müssen mehr Module in der Reihenschaltung vorhanden sein, als zum Erzeugen einer vorgegebenen Ausgangsspannung notwendig wären. Dies verursacht hohe Kosten, hohe Verlustleistungen und eine große Bauform des Multilevelstromrichters.

Der Erfindung liegt die Aufgabe zugrunde, einen Multilevelstromrichter und ein Verfahren anzugeben, bei denen die Anzahl der Module reduziert werden kann.

Diese Aufgabe wird erfindungsgemäß gelöst durch einen Multilevelstromrichter und durch ein Verfahren nach den unabhängigen Patentansprüchen. Vorteilhafte Ausführungsformen des Multilevelstromrichters und des Verfahrens sind in den abhängigen Patentansprüchen angegeben.

Offenbart wird ein Multilevelstromrichter mit einem Phasenmodul, welches zwischen einem ersten Gleichspannungsanschluss und einem zweiten Gleichspannungsanschluss des Multilevelstromrichters angeordnet ist und welches eine Vielzahl von Modulen aufweist, wobei das Phasenmodul einen ersten Phasenmodulzweig aufweist, der mit dem ersten Gleichspannungsanschluss verbunden ist, und einen zweiten Phasenmodulzweig aufweist, der mit dem zweiten Gleichspannungsanschluss verbunden ist, und wobei die Module jeweils mindestens zwei elektronische Schaltelemente und einen elektrischen Energiespeicher aufweisen, und wobei der Multilevelstromrichter drei derartige Phasenmodule aufweist.

Der Multilevelstromrichter weist einen dritten Phasenmodulzweig auf, der den ersten Phasenmodulzweig mit dem zweiten Phasenmodulzweig verbindet, und eine Schalteinrichtung, welche in einer ersten Schaltstellung einen Wechselspannungsanschluss des Multilevelstromrichters mit einem ersten Verbindungspunkt zwischen dem ersten Phasenmodulzweig und dem dritten Phasenmodulzweig (elektrisch) verbindet und in einer zweiten Schaltstellung den Wechselspannungsanschluss mit einem zweiten Verbindungspunkt zwischen dem dritten Phasenmodulzweig und dem zweiten Phasenmodulzweig (elektrisch) verbindet. Mit anderen Worten gesagt, ist die Schalteinrichtung dazu eingerichtet, in einer ersten Schaltstellung einen Wechselspannungsanschluss des Multilevelstromrichters mit einem ersten Verbindungspunkt zwischen dem ersten Phasenmodulzweig und dem dritten Phasenmodulzweig (elektrisch) zu verbinden und in einer zweiten Schaltstellung den Wechselspannungsanschluss mit einem zweiten Verbindungspunkt zwischen dem dritten Phasenmodulzweig und dem zweiten Phasenmodulzweig (elektrisch) zu verbinden. Der erste Verbindungspunkt ist der (gemeinsame) Verbindungspunkt von dem ersten Phasenmodulzweig und dem dritten Phasenmodulzweig. Der erste Verbindungspunkt ist also der Punkt, an dem der erste Phasenmodulzweig elektrisch mit dem dritten Phasenmodulzweig verbunden ist. Der zweite Verbindungspunkt ist der (gemeinsame) Verbindungspunkt von dem dritten Phasenmodulzweig und dem zweiten Phasenmodulzweig. Der zweite Verbindungspunkt ist also der Punkt, an dem der dritte Phasenmodulzweig elektrisch mit dem zweiten Phasenmodulzweig verbunden ist.

Dabei ist besonders vorteilhaft, dass die Schalteinrichtung den Wechselspannungsanschluss des Multilevelstromrichters entweder mit dem ersten Verbindungspunkt oder mit dem zweiten Verbindungspunkt elektrisch verbindet. Dadurch kann die Anzahl der Module zwischen dem Wechselspannungsanschluss und dem ersten Gleichspannungsanschluss nach Bedarf um die Anzahl der Module des dritten Phasenmodulzweigs vergrößert oder verkleinert werden. Ebenso kann die Anzahl der Module zwischen dem Wechselspannungsanschluss und dem zweiten Gleichspannungsanschluss um die Anzahl der Module des dritten Phasenmodulzweigs vergrößert oder verkleinert werden. Mit anderen Worten gesagt, können also die Module des dritten Phasenmodulzweigs bedarfsweise dem ersten Phasenmodulzweig oder dem zweiten Phasenmodulzweig zugeordnet werden. Diese Module des dritten Phasenmodulzweigs haben also eine Doppelfunktion. Je nach Schaltstellung der Schalteinrichtung werden diese Module zwischen den Wechselspannungsanschluss des Multilevelstromrichters und den ersten Gleichspannungsanschluss geschaltet oder zwischen den Wechselspannungsanschluss und den zweiten Gleichspannungsanschluss geschaltet. Die Module des dritten Phasenmodulzweigs werden also zum Erzeugen verschiedener Spannungen des Multilevelstromrichters eingesetzt. Durch die Möglichkeit der Umschaltung zwischen der ersten Schaltstellung und der zweiten Schaltstellung brauchen die Module des dritten Phasenmodulzweiges nur einmal vorhanden zu sein. (Bei dem bisher bekannten Multilevelstromrichter müssen die Module zweimal vorhanden, nämlich einmal im dem ersten (positivseitigen) Phasenmodulzweig im einmal in dem zweiten (negativseitigen) Phasenmodulzweig.) Dadurch kann die Anzahl der benötigten Module pro Phasenmodul deutlich verringert werden. Dies führt auch zu einer deutlichen Verringerung der Größe des Multilevelstromrichters, der Stromrichterverluste und der Kosten. Es ist möglich, 25 % der benötigten Module einzusparen. Außerdem kann mittels der Schalteinrichtung eine schnelle Fehlerklärung realisiert werden. Auch wenn der Begriff "Schaltstellung" verwendet wird, bedeutet dies nicht, dass die Schalteinrichtung notwendigerweise eine mechanische Schalteinrichtung sein muss. Vielmehr ist vorteilhafterweise vorgesehen, dass die Schalteinrichtung eine leistungselektronische Schalteinrichtung sein kann, siehe unten.

Der Multilevelstromrichter kann so ausgestaltet sein, dass die Schalteinrichtung in der zweiten Schaltstellung den Wechselspannungsanschluss des Multilevelstromrichters von dem ersten Verbindungspunkt (elektrisch) trennt und in der ersten Schaltstellung den Wechselspannungsanschluss von dem zweiten Verbindungspunkt (elektrisch) trennt. Allgemein gesagt, verbindet die Schalteinrichtung den Wechselspannungsanschluss in jeder Schaltstellung jeweils nur maximal mit einem (der Schaltstellung zugehörigen) Verbindungspunkt (und trennt den Wechselspannungsanschluss von den jeweils anderen Verbindungspunkten.) Die Schalteinrichtung verbindet also (in ihren Schaltstellungen) den Wechselspannungsanschluss jeweils exklusiv mit einem (der Schaltstellung zugehörigen) Verbindungspunkt. Natürlich kann es auch eine Schaltstellung geben, in der der Wechselspannungsanschluss von allen Verbindungspunkten getrennt ist.

Der Multilevelstromrichter kann auch so ausgestaltet sein, dass der erste Phasenmodulzweig, der zweite Phasenmodulzweig und der dritte Phasenmodulzweig jeweils mindestens zwei der Module, insbesondere jeweils mindestens fünf der Module, in einer Reihenschaltung aufweisen.

Der Multilevelstromrichter kann auch so ausgestaltet sein, dass die Schalteinrichtung (als Schaltelemente) Thyristoren aufweist. Mittels Thyristoren lässt sich die Umschaltung zwischen dem ersten Verbindungspunkt und dem zweiten Verbindungspunkt besonders schnell durchführen.

Der Multilevelstromrichter kann auch so ausgestaltet sein, dass
- die Schalteinrichtung einen ersten leistungselektronischen Schalter aufweist, der bei der ersten Schaltstellung der Schalteinrichtung den Wechselspannungsanschluss mit dem ersten Verbindungspunkt (elektrisch) verbindet und bei der zweiten Schaltstellung der Schalteinrichtung den Wechselspannungsanschluss von dem ersten Verbindungspunkt (elektrisch) trennt und
- die Schalteinrichtung einen zweiten leistungselektronischen Schalter aufweist, der bei der zweiten Schaltstellung der Schalteinrichtung den Wechselspannungsanschluss mit dem zweiten Verbindungspunkt (elektrisch) verbindet und bei der ersten Schaltstellung der Schalteinrichtung den Wechselspannungsanschluss von dem zweiten Verbindungspunkt (elektrisch) trennt. Mit den beiden leistungselektronischen Schaltern der Schalteinrichtung lässt sich die Umschaltung zwischen dem ersten Verbindungspunkt und dem zweiten Verbindungspunkt besonders einfach und schnell durchführen.

Der Multilevelstromrichter kann so ausgestaltet sein, dass der erste leistungselektronische Schalter und der zweite leistungselektronische Schalter jeweils Thyristoren aufweisen.

Der Multilevelstromrichter kann auch so ausgestaltet sein, dass der erste leistungselektronische Schalter und der zweite leistungselektronische Schalter jeweils antiparallel geschaltete Thyristoren aufweisen. Dadurch können die leistungselektronischen Schalter den durch den Wechselspannungsanschluss fließenden Wechselstrom mit beiden Polaritäten schalten.

Der Multilevelstromrichter kann so ausgestaltet sein, dass mindestens ein Modul des dritten Phasenmodulzweigs so ausgestaltet ist, dass es eine Spannung positiver oder negativer Polarität auszugeben imstande ist. Dies unterstützt vorteilhafterweise insbesondere den Abschaltvorgang der Thyristoren. Dabei ist besonders vorteilhaft, dass das mindestens eine Modul in der Lage ist, sowohl eine negative Spannung als auch eine positive Spannung zu erzeugen und auszugeben. Mittels dieser Spannung lässt sich die Kommutierung des über den Wechselspannungsanschluss fließenden Stroms von dem ersten Verbindungspunkt zu dem zweiten Verbindungspunkt sicher und zuverlässig realisieren. Dies kann beispielsweise dadurch erfolgen, dass mittels des Moduls eine dem ursprünglichen Stromfluss entgegengerichtete Spannung als Kommutierungsspannung erzeugt wird.

Der Multilevelstromrichter kann so ausgestaltet sein, dass mindestens ein Modul des dritten Phasenmodulzweigs eine Vollbrückenschaltung aufweist. Dabei ist besonders vorteilhaft, dass das mindestens eine Modul mit Vollbrückenschaltung in der Lage ist, sowohl eine negative Spannung als auch eine positive Spannung zu erzeugen und auszugeben. Dies unterstützt die Kommutierung, wie vorstehend angegeben ist.

Der Multilevelstromrichter kann so ausgestaltet sein, dass die Vollbrückenschaltung vier elektronische Schaltelemente und einen elektrischen Energiespeicher aufweist.

Der Multilevelstromrichter kann auch so ausgestaltet sein, dass der dritte Phasenmodulzweig mehrere elektrisch in Reihe geschaltete Teilzweige aufweist, und die Schalteinrichtung eine dritte Schaltstellung aufweist, bei der der Wechselspannungsanschluss mit einem dritten Verbindungspunkt zweier Teilzweige verbunden ist (und bei der der Wechselspannungsanschluss von dem ersten Verbindungspunkt und dem zweiten Verbindungspunkt (elektrisch) getrennt ist). Dieser Multilevelstromrichter weist weitere Verbindungspunkte (Potenzialpunkte) auf, mit denen der Wechselspannungsanschluss mittels der Schalteinrichtung verbunden werden kann.

Der Multilevelstromrichter kann auch so ausgestaltet sein, dass die Schalteinrichtung die Schaltstellungen (, insbesondere die erste Schaltstellung und die zweite Schaltstellung,) in Abhängigkeit von dem Augenblickswert der an dem Wechselspannungsanschluss anliegenden Spannung (Wechselspannung) einnimmt. Vorteilhafterweise kann die Schalteinrichtung so angesteuert werden, dass sie die Schaltstellungen in Abhängigkeit von dem Augenblickswert der an den Wechselspannungsanschluss anliegenden Spannung (Wechselspannung) einnimmt. Dadurch ergibt sich eine besonders einfache Art der Ansteuerung der Schalteinrichtung.

Es braucht lediglich der Augenblickswert der Wechselspannung ausgewertet zu werden und in Abhängigkeit von der Höhe des Augenblickswertes nimmt die Schalteinrichtung die jeweilige Schaltstellung (insbesondere die erste Schaltstellung und die zweite Schaltstellung) ein.

Der Multilevelstromrichter kann auch so ausgestaltet sein, dass
- die Schalteinrichtung die erste Schaltstellung einnimmt, wenn der Augenblickswert der an dem Wechselspannungsanschluss anliegenden Spannung größer (oder gleich) Null ist, und die Schalteinrichtung die zweite Schaltstellung einnimmt, wenn der Augenblickswert der an dem Wechselspannungsanschluss anliegenden Spannung kleiner Null ist, oder
- die Schalteinrichtung die erste Schaltstellung einnimmt, wenn der Augenblickswert der an dem Wechselspannungsanschluss anliegenden Spannung in einem ersten vorgewählten Spannungsbereich liegt, und die Schalteinrichtung die zweite Schaltstellung einnimmt, wenn der Augenblickswert der an dem Wechselspannungsanschluss anliegenden Spannung in einem zweiten vorgewählten Spannungsbereich liegt. Die erste Alternative bildet vorteilhafterweise eine besonders einfache Möglichkeit festzulegen, wann die Schalteinrichtung die erste Schaltstellung und wann sie die zweite Schaltstellung einnimmt: wenn der Augenblickswert der Wechselspannung größer (oder gleich) null ist wird die erste Schaltstellung eingenommen; wenn der Augenblickswert der Wechselspannung kleiner null ist, wird die zweite Schaltstellung eingenommen. Die zweite Alternative gibt an, dass die erste Schaltstellung eingenommen wird, wenn der Augenblickswert der Wechselspannung in einem ersten vorgewählten Spannungsbereich liegt. Wenn der Augenblickswert in einem zweiten vorgewählten Spannungsbereich liegt, dann wird die zweite Schaltstellung eingenommen. Diese Variante ermöglicht ein noch flexibleres Schalten der Schalteinrichtung.

Offenbart wird weiterhin eine Hochspannungs-Gleichstrom-Übertragungsanlage mit einem Stromrichter gemäß den vorstehend beschriebenen Varianten.

Offenbart wird weiterhin ein Verfahren zum Betreiben eines Multilevelstromrichters mit mindestens einem Phasenmodul, welches zwischen einem ersten Gleichspannungsanschluss und einem zweiten Gleichspannungsanschluss des Multilevelstromrichters angeordnet ist und welches eine Vielzahl von Modulen aufweist, wobei das Phasenmodul einen ersten Phasenmodulzweig aufweist, der mit dem ersten Gleichspannungsanschluss verbunden ist, einen zweiten Phasenmodulzweig aufweist, der mit dem zweiten Gleichspannungsanschluss verbunden ist,
und einen dritten Phasenmodulzweig aufweist, der den ersten Phasenmodulzweig mit dem zweiten Phasenmodulzweig verbindet, wobei bei dem Verfahren
- ein Augenblickswert der an einem Wechselspannungsanschluss des Multilevelstromrichters anliegenden Spannung gemessen wird, und
- in Abhängigkeit von dem gemessenen Augenblickswert der Wechselspannungsanschluss mit einem ersten Verbindungspunkt zwischen dem ersten Phasenmodulzweig und dem dritten Phasenmodulzweig oder mit einem zweiten Verbindungspunkt zwischen dem dritten Phasenmodulzweig und dem zweiten Phasenmodulzweig (elektrisch) verbunden wird.

Das Verfahren kann so ablaufen, dass
- der Wechselspannungsanschluss mit dem ersten Verbindungspunkt oder dem zweiten Verbindungspunkt (elektrisch) verbunden wird mittels einer Schalteinrichtung, die mindestens einen leistungselektronischen Schalter aufweist.

Das Verfahren kann auch so ablaufen, dass
- mittels einer Schalteinrichtung in deren ersten Schaltstellung der Wechselspannungsanschluss mit dem ersten Verbindungspunkt(elektrisch) verbunden wird und der Wechselspannungsanschluss von dem zweiten Verbindungspunkt (elektrisch) getrennt wird, und
- mittels der Schalteinrichtung in deren zweiten Schaltstellung der Wechselspannungsanschluss mit dem zweiten Verbindungspunkt (elektrisch) verbunden wird und der Wechselspannungsanschluss von dem ersten Verbindungspunkt (elektrisch) getrennt wird.

Das Verfahren kann so ablaufen, dass
- der Wechselspannungsanschluss mit dem ersten Verbindungspunkt (elektrisch) verbunden wird, wenn der Augenblickswert der an dem Wechselspannungsanschluss anliegenden Spannung größer (oder gleich) Null ist, und der Wechselspannungsanschluss mit dem zweiten Verbindungspunkt (elektrisch) verbunden wird, wenn der Augenblickswert der an dem Wechselspannungsanschluss anliegenden Spannung kleiner Null ist, oder
- der Wechselspannungsanschluss mit dem ersten Verbindungspunkt (elektrisch) verbunden wird, wenn der Augenblickswert der an dem Wechselspannungsanschluss anliegenden Spannung in einem ersten vorgewählten Spannungsbereich liegt und der Wechselspannungsanschluss mit dem zweiten Verbindungspunkt (elektrisch) verbunden wird, wenn der Augenblickswert der an dem Wechselspannungsanschluss anliegenden Spannung in einem zweiten vorgewählten Spannungsbereich liegt.

Das Verfahren kann auch so ablaufen, dass
- der dritte Phasenmodulzweig mehrere elektrisch in Reihe geschaltete Teilzweige aufweist, zwischen denen mindestens ein weiterer Verbindungspunkt besteht, wobei in Abhängigkeit von dem gemessenen Augenblickswert (der an dem Wechselspannungsanschluss des Multilevelstromrichters anliegenden Spannung) der Wechselspannungsanschluss mit dem ersten Verbindungspunkt, mit dem zweiten Verbindungspunkt oder mit dem weiteren Verbindungspunkte (elektrisch) verbunden wird.

Das Verfahren kann so ablaufen, dass
- bei Auftreten eines Fehlers, insbesondere bei Auftreten eines (gleichspannungsseitigen) Kurzschlusses, der Wechselspannungsanschluss mittels der Schalteinrichtung (in deren Fehler-Schaltstellung) von dem Phasenmodul (insbesondere von den Verbindungspunkten des Phasenmoduls) elektrisch getrennt wird.

Der beschriebene Multilevelstromrichter und das beschriebene Verfahren weisen gleiche bzw. gleichartige Vorteile auf.

Relevanter Stand der Technik für die vorliegende Erfindung ist WO2016177398 A1, WO2017029327 A1, US2017077834 A1, US2013308235 A1 und NAMI ALIREZA ET AL: "Modular Multilevel Converters for HVDC Applications: Review on Converter Cells and Functionalities", IEEE TRANSACTIONS ON POWER ELECTRONICS, INSTITUTE OF ELECTRICAL AND ELECTRONICS ENGINEERS, USA, Bd. 30, Nr. 1, 1. Januar 2015 (2015-01-01), Seiten 18-36. Diese Druckschriften offenbaren ebenfalls Multilevelstromrichter mit einer hybriden Struktur.

Im Folgenden wird die Erfindung anhand von Ausführungsbeispielen näher erläutert. Gleiche Bezugszeichen verweisen dabei auf gleiche oder gleichwirkende Elemente. Dazu ist in
- Figur 1: ein Ausführungsbeispiel eines aus dem Stand der Technik bekannten Multilevelstromrichters, in
- Figur 2: ein Phasenmodul des bekannten Multilevelstromrichters, in
- Figur 3: ein beispielhafter Spannungsverlauf bei dem Phasenmodul gemäß Figur 2, in
- Figur 4: ein Ausführungsbeispiel eines erfindungsgemäßen Phasenmoduls eines Multilevelstromrichters, in
- Figur 5: ein beispielhafter Spannungsverlauf an dem Phasenmodul gemäß Figur 4, in
- Figur 6: eine alternative Darstellung des Phasenmoduls gemäß Figur 4, in
- Figur 7: ein weiteres Ausführungsbeispiel eines Phasenmoduls eines Multilevelstromrichters, in
- Figur 8: ein Ausführungsbeispiel eines Multilevelstromrichters mit drei Phasenmodulen, in
- Figur 9: ein Ausführungsbeispiel eines Moduls des Multilevelstromrichters, in
- Figur 10: ein weiteres Ausführungsbeispiel eines Moduls des Multilevelstromrichters, und in
- Figur 11: ein Ausführungsbeispiel einer Hochspannungs-Gleichstrom-Übertragungsanlage dargestellt.

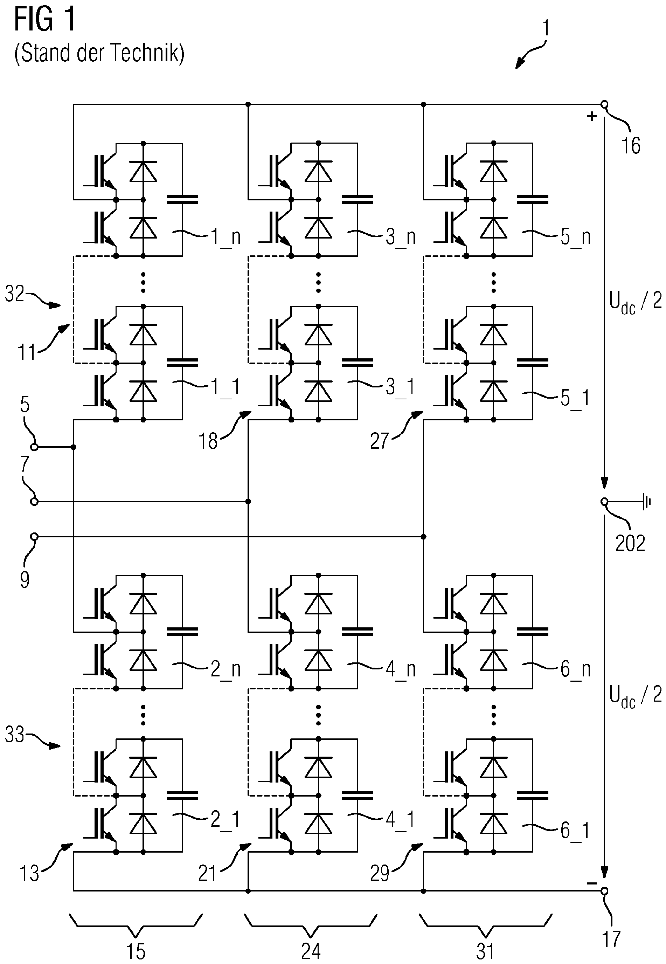

In Figur 1 ist ein aus dem Stand der Technik bekannter Multilevelstromrichter 1 (modular multilevel converter, MMC) dargestellt. Dieser Multilevelstromrichter 1 weist einen ersten Wechselspannungsanschluss 5, einen zweiten Wechselspannungsanschluss 7 und einen dritten Wechselspannungsanschluss 9 auf. Der erste Wechselspannungsanschluss 5 ist elektrisch mit einem ersten Phasenmodulzweig 11 und einem zweiten Phasenmodulzweig 13 verbunden. Der erste Phasenmodulzweig 11 und der zweite Phasenmodulzweig 13 bilden ein erstes Phasenmodul 15 des Stromrichters 1. Das dem ersten Wechselspannungsanschluss 5 abgewandte Ende des ersten Phasenmodulzweigs 11 ist mit einem ersten Gleichspannungsanschluss 16 elektrisch verbunden; das dem ersten Wechselspannungsanschluss 5 abgewandte Ende des zweiten Phasenmodulzweigs 13 ist mit einem zweiten Gleichspannungsanschluss 17 elektrisch verbunden. Der erste Gleichspannungsanschluss 16 ist ein positiver Gleichspannungsanschluss; der zweite Gleichspannungsanschluss 17 ist ein negativer Gleichspannungsanschluss.

Der zweite Wechselspannungsanschluss 7 ist mit einem Ende eines dritten Phasenmodulzweigs 18 und mit einem Ende eines vierten Phasenmodulzweigs 21 elektrisch verbunden. Der dritte Phasenmodulzweig 18 und der vierte Phasenmodulzweig 21 bilden ein zweites Phasenmodul 24. Der dritte Wechselspannungsanschluss 9 ist mit einem Ende eines fünften Phasenmodulzweigs 27 und mit einem Ende eines sechsten Phasenmodulzweigs 29 elektrisch verbunden. Der fünfte Phasenmodulzweig 27 und der sechste Phasenmodulzweig 29 bilden ein drittes Phasenmodul 31.

Das dem zweiten Wechselspannungsanschluss 7 abgewandte Ende des dritten Phasenmodulzweigs 18 und das dem dritten Wechselspannungsanschluss 9 abgewandte Ende des fünften Phasenmodulzweigs 27 sind mit dem ersten Gleichspannungsanschluss 16 elektrisch verbunden. Das dem zweiten Wechselspannungsanschluss 7 abgewandte Ende des vierten Phasenmodulzweigs 21 und das dem dritten Wechselspannungsanschluss 9 abgewandte Ende des sechsten Phasenmodulzweigs 29 sind mit dem zweiten Gleichspannungsanschluss 17 elektrisch verbunden. Der erste Phasenmodulzweig 11, der dritte Phasenmodulzweig 18 und der fünfte Phasenmodulzweig 27 bilden ein positivseitiges Stromrichterteil 32; der zweite Phasenmodulzweig 13, der vierte Phasenmodulzweig 21 und der sechste Phasenmodulzweig 29 bilden ein negativseitiges Stromrichterteil 33.

Der erste Wechselspannungsanschluss 5, der zweite Wechselspannungsanschluss 7 und der dritte Wechselspannungsanschluss 9 können elektrisch verbunden sein mit einem Wechselstrom-Energieübertragungsnetz (nicht dargestellt).

Jeder Phasenmodulzweig weist eine Mehrzahl von Modulen (1 1 ... 1_n; 2_1 ... 2_n; usw.) auf, welche (mittels ihrer galvanischen Stromanschlüsse) elektrisch in Reihe geschaltet sind. Solche Module werden auch als Submodule bezeichnet. Im Ausführungsbeispiel der Figur 1 weist jeder Phasenmodulzweig n Module auf. Die Anzahl der mittels ihrer galvanischen Stromanschlüsse elektrisch in Reihe geschalteten Module kann sehr verschieden sein, mindestens sind zwei Module in Reihe geschaltet, es können aber auch beispielsweise 5, 50, 100 oder mehr Module elektrisch in Reihe geschaltet sein. Im Ausführungsbeispiel ist n = 36: der erste Phasenmodulzweig 11 weist also 36 Module 1_1, 1_2, 1_3, ... 1_36 auf. Die anderen Phasenmodulzweige 13, 18, 21, 27 und 29 sind gleichartig aufgebaut.

Von einer nicht dargestellten Steuereinrichtung des Stromrichters 1 werden optische Nachrichten beziehungsweise optische Signale über eine optische Kommunikationsverbindung (zum Beispiel über einen Lichtwellenleiter) zu den einzelnen Modulen 1_1 bis 6_n übertragen. Beispielsweise sendet die Steuereinrichtung an die einzelnen Module jeweils einen Sollwert zur Höhe der Ausgangsspannung, die das jeweilige Modul bereitstellen soll.

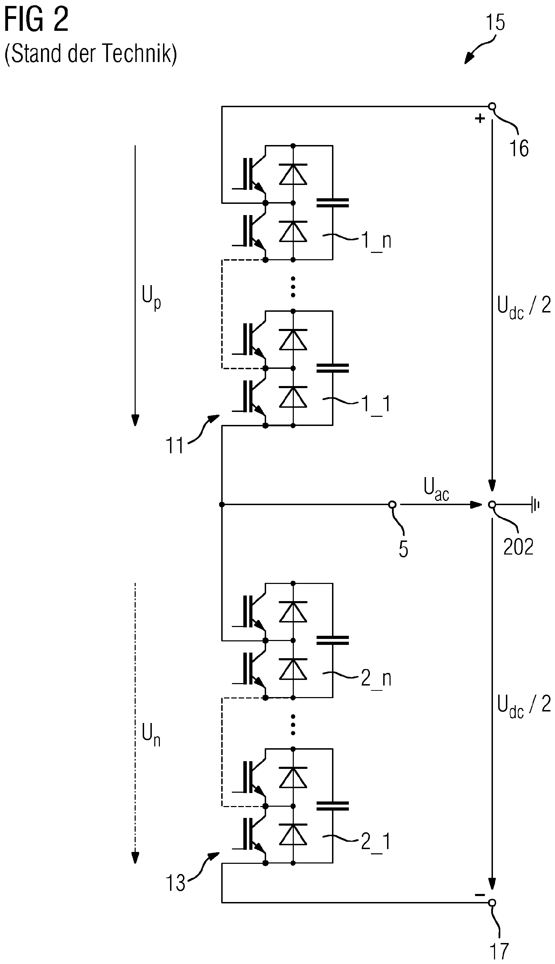

In Figur 2 ist das erste Phasenmodul 15 des Multilevelstromrichters 1 dargestellt. An diesem ersten Phasenmodul 15 sind verschiedene Spannungen dargestellt. Über dem ersten Phasenmodulzweig 11 liegt eine erste Spannung U_{P} an, über dem zweiten Phasenmodulzweig 13 liegt eine zweite Spannung Uₙ an. Zwischen dem ersten Wechselspannungsanschluss 5 und einem Masseanschluss 202 liegt eine Wechselspannung U_{ac} an. Zwischen dem ersten Gleichspannungsanschluss 16 und dem Masseanschluss 202 liegt die Spannung 1/2 U_{dc} an, wobei U_{dc} die gesamte Gleichspannung ist, die zwischen dem ersten Gleichspannungsanschluss 16 und dem zweiten Gleichspannungsanschluss 17 anliegt. Zwischen dem Masseanschluss 202 und dem zweiten Gleichspannungsanschluss 17 liegt ebenfalls die Spannung 1/2 U_{dc} an.

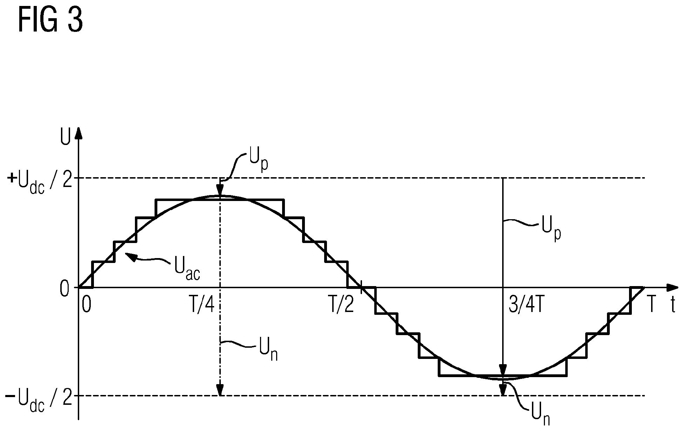

In Figur 3 sind diese Spannungen beispielhaft grafisch über der Zeit t dargestellt. Dabei ist eine Periode der Wechselspannung U_{ac} dargestellt, welche an dem ersten Wechselspannungsanschluss 5 auftritt. Zum Zeitpunkt t=T/4 (der einer Viertelperiodendauer der Wechselspannung entspricht) tritt der positive Maximalwert (positiver Maximal-Augenblickswert) der Wechselspannung U_{ac} auf, bei Zeitpunkt t=3/4 T tritt der negative Maximalwert der Wechselspannung auf. Zum Zeitpunkt t=T/4 liegt fast die gesamte Gleichspannung U_{dc} als Spannung Uₙ an dem zweiten Phasenmodulzweig 13 an. Zum Zeitpunkt t=3/4 T liegt fast die gesamte Gleichspannung U_{dc} als Spannung U_{P} an dem ersten Phasenmodulzweig 11 an. Das bedeutet, dass sowohl der erste Phasenmodulzweig 11 als auch der zweite Phasenmodulzweig 13 so ausgestaltet sein müssen, dass sie jeweils mit der kompletten Gleichspannung U_{dc} beaufschlagt werden können. Mit anderen Worten ist eine entsprechend große Anzahl an Modulen 1_1 ... 1_n, 2_1 ... 2_n in den Phasenmodulzweigen 11, 13 notwendig, da jedes Modul nur für eine vorgegebene maximale Spannungsbeaufschlagung geeignet ist.

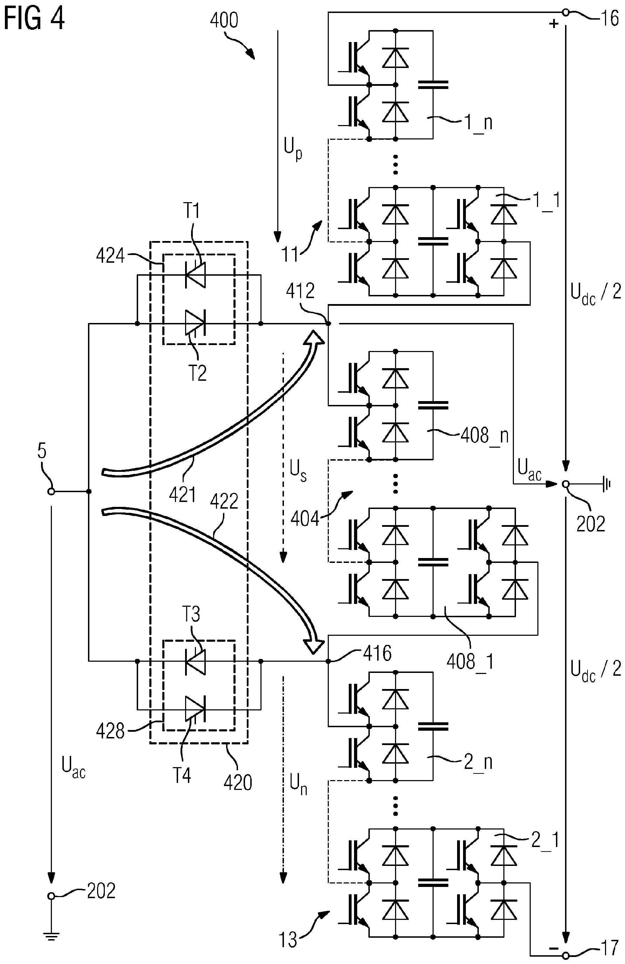

In Figur 4 ist ein Ausführungsbeispiel eines erfindungsgemäßen Phasenmoduls 400 dargestellt. Dieses Phasenmodul 400 weist neben dem ersten (positivseitigen) Phasenmodulzweig 11 und dem zweiten (negativseitigen) Phasenmodulzweig 13 einen dritten (mittleren) Phasenmodulzweig 404 auf. An dem dritten Phasenmodulzweig 404 tritt eine dritte Spannung U_{S} auf. Das Phasenmodul 400 ist zwischen dem ersten Gleichspannungsanschluss 16 und dem zweiten Gleichspannungsanschluss 17 angeordnet, wobei der erste Phasenmodulzweig 11 mit dem ersten Gleichspannungsanschluss 16 verbunden ist. Der zweite Phasenmodulzweig 13 ist mit dem zweiten Gleichspannungsanschluss 17 verbunden. Jeder Phasenmodulzweig weist eine Vielzahl von Modulen auf. Im Ausführungsbeispiel weist der erste Phasenmodulzweig 11 n Module 1_1 ... 1_n auf, die jeweils in Halbbrückenschaltung (Halbbrücken-Module) oder in Vollbrückenschaltung (Vollbrücken-Module) ausgestaltet sein können. Beispielhaft ist das Modul 1_1 als Vollbrücken-Modul und das Modul 1_n als Halbbrücken-Modul dargestellt. Ebenso weist der zweite Phasenmodulzweig 13 n Module 2_1 ... 2_n auf,. die jeweils in Halbbrückenschaltung (Halbbrücken-Module) oder in Vollbrückenschaltung (Vollbrücken-Module) ausgestaltet sein können. Der erste Phasenmodulzweig 11 und der zweite Phasenmodulzweig 13 können also beispielsweise auch jeweils nur Halbbrücken-Module (oder jeweils nur Vollbrücken-Module) aufweisen.

Der dritte Phasenmodulzweig 404 weist mindestens ein Modul 408_1 mit einer Vollbrückenschaltung (Vollbrücken-Modul 408_1) auf, sowie weitere Module 408_2 bis 408_n, die jeweils in Halbbrückenschaltung (Halbbrücken-Module) oder in Vollbrückenschaltung (Vollbrücken-Module) ausgestaltet sein können.

Der dritte Phasenmodulzweig 404 verbindet den ersten Phasenmodulzweig 11 mit dem zweiten Phasenmodulzweig 13 unter Ausbildung eines ersten Verbindungspunktes 412 zwischen dem ersten Phasenmodulzweig 11 und dem dritten Phasenmodulzweig 404 und unter Ausbildung eines zweiten Verbindungspunktes 416 zwischen dem dritten Phasenmodulzweig 404 und dem zweiten Phasenmodulzweig 13. Eine Schalteinrichtung 420 ist dazu eingerichtet, in einer ersten Schaltstellung 421 den ersten Wechselspannungsanschluss 5 mit dem ersten Verbindungspunkt 412 elektrisch zu verbinden, und in einer zweiten Schaltstellung 422 den ersten Wechselspannungsanschluss 5 mit dem zweiten Verbindungspunkt 416 elektrisch zu verbinden. Weiterhin ist die Schalteinrichtung 420 dazu eingerichtet, in der zweiten Schaltstellung 422 den Wechselspannungsanschluss 5 elektrisch von dem ersten Verbindungspunkt 412 zu trennen und in der ersten Schaltstellung 421 den ersten Wechselspannungsanschluss 5 elektrisch von dem zweiten Verbindungspunkt 416 zu trennen.

Die Schalteinrichtung 420 weist als Schaltelemente einen ersten Thyristor T1, einen zweiten Thyristor T2, einen dritten Thyristor T3 und einen vierten Thyristor T4 auf. Genauer gesagt weist die Schalteinrichtung einen ersten leistungselektronischen Schalter 424 und einen zweiten leistungselektronischen Schalter 428 auf. Der erste leistungselektronische Schalter 424 weist dabei den ersten Thyristor T1 und den zweiten Thyristor T2 auf; der zweite leistungselektronische Schalter 428 weist dabei den dritten Thyristor T3 und den vierten Thyristor T4 auf. Der erste leistungselektronische Schalter 424 weist also antiparallel geschaltete Thyristoren T1 und T2 auf; der zweite leistungselektronische Schalter 428 weist antiparallel geschaltete Thyristoren T3 und T4 auf.

Die Darstellung mit einzelnen Thyristoren T1, T2, T3 und T4 ist hierbei nur symbolisch zu verstehen. In der Realität können beispielsweise eine größere Anzahl von Thyristoren in Reihe und/oder parallel geschaltet sein, um die benötigten Spannungs- und Stromwerte zu realisieren.

Der erste leistungselektronische Schalter 424 verbindet bei der ersten Schaltstellung der Schalteinrichtung 420 den ersten Wechselspannungsanschluss 5 mit dem ersten Verbindungspunkt 412 elektrisch; der erste leistungselektronische Schalter 424 trennt bei der zweiten Schaltstellung der Schalteinrichtung 420 den ersten Wechselspannungsanschluss 5 von dem ersten Verbindungspunkt 412 elektrisch. Der zweite leistungselektronische Schalter 428 verbindet bei der zweiten Schaltstellung der Schalteinrichtung 420 elektrisch den ersten Wechselspannungsanschluss 5 mit dem zweiten Verbindungspunkt 416; der zweite leistungselektronische Schalter 428 trennt bei der ersten Schaltstellung der Schalteinrichtung 420 den ersten Wechselspannungsanschluss 5 von dem zweiten Verbindungspunkt 416 elektrisch.

Die Schalteinrichtung 420 nimmt ihre Schaltstellungen (also die erste Schaltstellung und die zweite Schaltstellung) in Abhängigkeit von dem Augenblickswert der an dem Wechselspannungsanschluss 5 anliegenden Wechselspannung ein. Genauer gesagt wird die Schalteinrichtung 420 von einer (nicht dargestellten) Ansteuereinrichtung so angesteuert, dass sie ihre Schaltstellungen (also die erste Schaltstellung und die zweite Schaltstellung) in Abhängigkeit von dem Augenblickswert der an dem Wechselspannungsanschluss 5 anliegenden Wechselspannung einnimmt. Dabei nimmt die Schalteinrichtung 420 dann die erste Schaltstellung ein, wenn der Augenblickswert der Wechselspannung größer (oder gleich) null ist. Dann ist der erste Wechselspannungsanschluss 5 mit dem ersten Verbindungspunkt 412 elektrisch verbunden. Die Schalteinrichtung 420 nimmt die zweite Schaltstellung ein, wenn der Augenblickswert der an dem Wechselspannungsanschluss 5 anliegenden Wechselspannung kleiner null ist. Dann ist der erste Wechselspannungsanschluss 5 mit dem zweiten Verbindungspunkt 416 elektrisch verbunden.

Der Multilevelstromrichter kann auch so eingerichtet sein, dass die Schalteinrichtung die erste Schaltstellung einnimmt, wenn der Augenblickswert der an dem Wechselspannungsanschluss anliegenden Spannung in einem ersten vorgewählten Spannungsbereich liegt, und die Schalteinrichtung die zweite Schaltstellung einnimmt, wenn der Augenblickswert der an dem Wechselspannungsanschluss anliegenden Spannung in einem zweiten vorgewählten Spannungsbereich liegt. Der erste vorgewählte Spannungsbereich kann zum Beispiel der Spannungsbereich zwischen 0 und +1/2 U_{dc} sein; der zweite vorgewählte Spannungsbereich kann zum Beispiel der Spannungsbereich zwischen -1/2 U_{dc} und 0 sein.

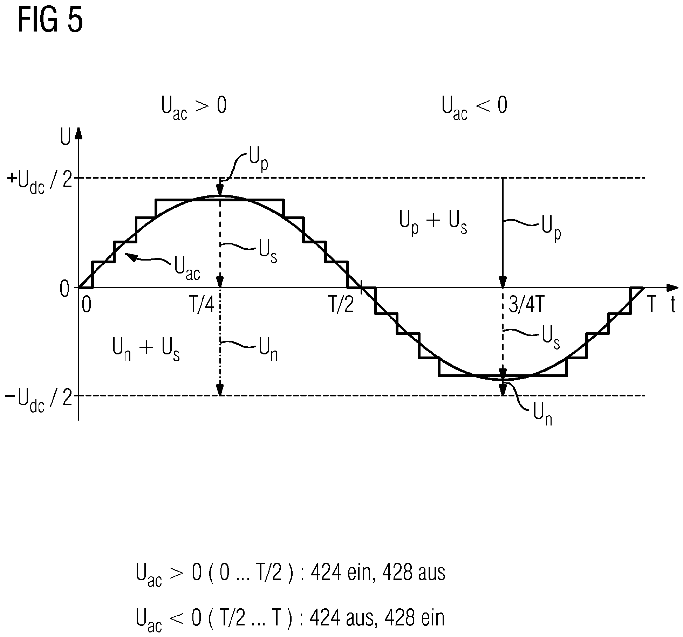

In Figur 5 ist ein Ausführungsbeispiel der sich in dem Phasenmodul 400 ergebenden Spannungen dargestellt. Während des Zeitintervalls zwischen t = 0 und t = 1/2 T (also während der Zeitspanne, bei der die Augenblickswerte der Wechselspannung U_{ac} größer null sind) liegt an dem ersten Phasenmodulzweig 11 nur die relativ geringe Spannung U_{P} an. Die größere Spannung (U_{dc} - U_{P}) verteilt sich auf den zweiten Phasenmodulzweig 13 (als Spannung Uₙ) und auf den dritten Phasenmodulzweig 404 (als Spannung U_{S}). Dadurch liegt an dem ersten Phasenmodulzweig 11, an dem zweiten Phasenmodulzweig 13 und dem dritten Phasenmodulzweig 404 jeweils maximal die Spannung 1/2 U_{dc} an. Also braucht jeder Phasenmodulzweig 11, 13 und 404 nur jeweils für die halbe maximale Gleichspannung 1/2 U_{dc} ausgestaltet zu sein. Im Vergleich zu dem bisher bekannten Phasenmodul 15 der Figur 2 sind also weniger Module notwendig. Es können 25 % der Module eingespart werden, weil die Module des dritten Phasenmodulzweigs 404 sozusagen wahlweise dem ersten Phasenmodulzweig 11 oder dem dritten Phasenmodulzweig 404 zugeordnet werden (dies setzt voraus, dass in jedem Phasenmodulzweig die gleiche Anzahl von Modulen vorhanden ist). Während der zweiten Periodendauer (also im Bereich zwischen t = 1/2 T und t = T liegt an dem zweiten Phasenmodulzweig 13 nur die relativ geringe Spannung Uₙ an, während sich die größere Spannung (U_{dc} - Uₙ) auf den ersten Phasenmodulzweig 11 und den zweiten Phasenmodulzweig 404 verteilt. Analog zu den Vorgängen in der ersten Hälfte der Periode der Wechselspannung tritt wieder an jedem Phasenmodulzweig maximal die Spannung 1/2 U_{dc} auf.

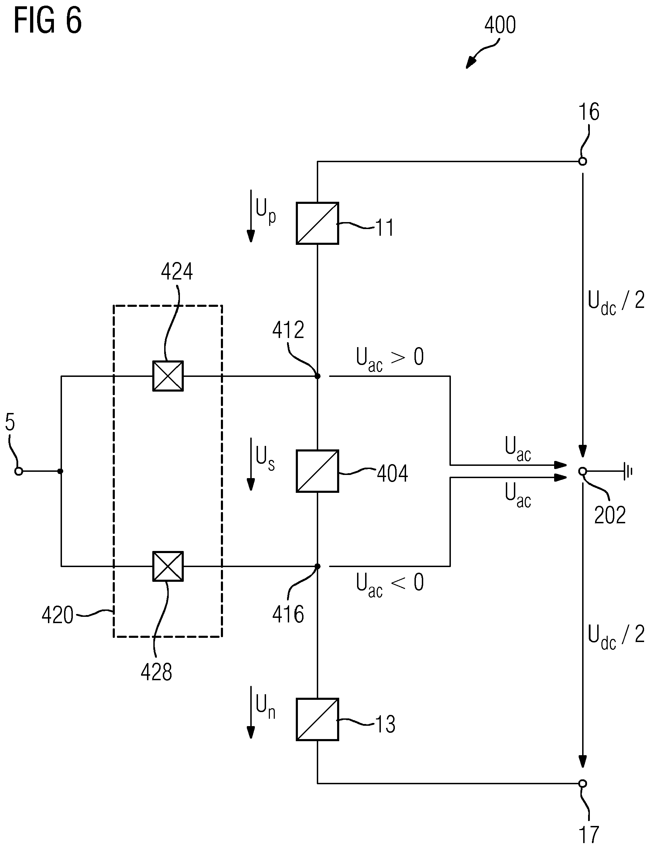

In Figur 6 ist das Phasenmodul 400 der Figur 4 noch einmal in einer vereinfachten Darstellung dargestellt. Dazu sind der erste Phasenmodulzweig 11, der zweite Phasenmodulzweig 13 und der dritte Phasenmodulzweig 404 symbolhaft jeweils als ein Quadrat mit einer eingezeichneten Diagonale dargestellt. Der erste leistungselektronische Schalter 424 und der zweite leistungselektronische Schalter 428 sind jeweils als ein kleineres Quadrat mit zwei eingezeichneten Diagonalen dargestellt. In Figur 6 ist weiterhin mittels Spannungspfeilen dargestellt, wie die an dem ersten Wechselspannungsanschluss 5 gegenüber dem Masseanschluss 202 auftretende Wechselspannung U_{ac} während der ersten Halbperiode der Wechselspannung (U_{ac} > 0) zwischen dem ersten Verbindungspunkt 412 und dem Masseanschluss 202 auftritt. Während der zweiten Halbperiode (U_{ac} < 0) tritt die Wechselspannung U_{ac} zwischen dem zweiten Verbindungspunkt 416 und dem Masseanschluss 202 auf (diese Darstellung setzt voraus, dass der erste leistungselektronische Schalter 424 und der zweite leistungselektronische Schalter 428 sich wie ideale Schalter verhalten, das heißt, über diesen Schaltern 424 und 428 tritt im eingeschalteten Zustand kein Spannungsabfall auf).

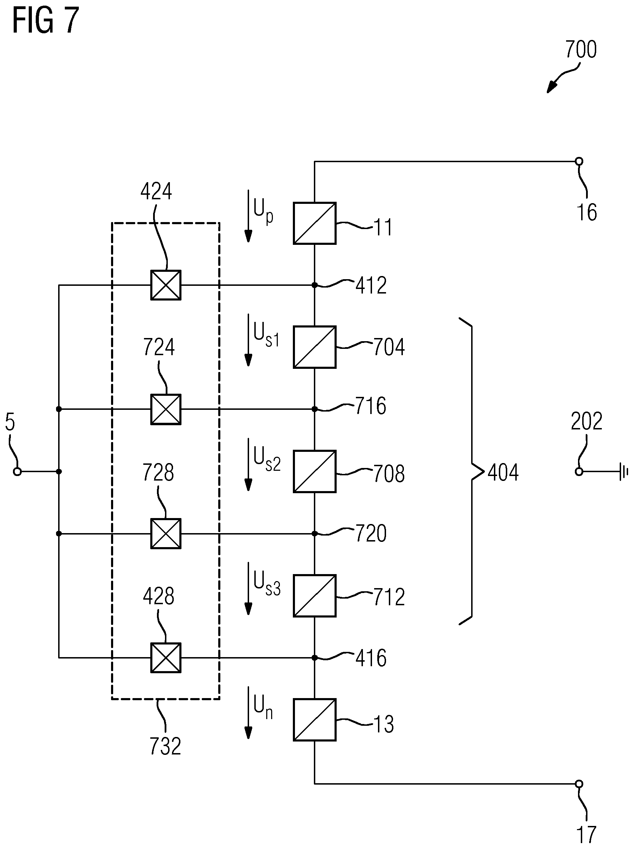

In Figur 7 ist ein weiteres Ausführungsbeispiel eines Phasenmoduls 700 dargestellt. Bei diesem Phasenmodul 700 ist im Unterschied zu dem Phasenmodul der Figur 6 der dritte Phasenmodulzweig in drei Teilzweige aufgeteilt: in einen ersten Teilzweig 704, einen zweiten Teilzweig 708 und einen dritten Teilzweig 712. Der erste Phasenmodulzweig 11 ist unter Ausbildung des ersten Verbindungspunktes 412 mit dem ersten Teilzweig 704 elektrisch verbunden. Der erste Teilzweig 704 ist unter Ausbildung eines dritten Verbindungspunktes 716 mit dem zweiten Teilzweig 708 elektrisch verbunden. Der zweite Teilzweig 708 ist unter Ausbildung eines vierten Verbindungspunktes 720 mit dem dritten Teilzweig 712 elektrisch verbunden und der dritte Teilzweig 712 ist unter Ausbildung des zweiten Verbindungspunktes 416 mit dem zweiten Phasenmodulzweig 13 elektrisch verbunden.

Ein dritter leistungselektronischer Schalter 724 verbindet (oder trennt) den dritten Verbindungspunkt 716 mit dem ersten Wechselstromanschluss 5 elektrisch. Ein vierter leistungselektronischer Schalter 728 verbindet (oder trennt) den vierten Verbindungspunkt 720 mit dem ersten Wechselspannungsanschluss 5 elektrisch. Die Schalteinrichtung 732 weist neben der aus Figur 6 bekannten ersten Schaltstellung und zweiten Schaltstellung zusätzlich auch eine dritte Schaltstellung und eine vierte Schaltstellung auf. Bei der dritten Schaltstellung wird der erste Wechselspannungsanschluss 5 mittels des dritten leistungselektronischen Schalters 724 mit dem dritten Verbindungspunkt 716 elektrisch verbunden (und mittels der anderen leistungselektronischen Schalter 424, 728 und 428 von den Verbindungspunkten 412, 720 und 416 elektrisch getrennt). Bei der vierten Schaltstellung der Schalteinrichtung 732 wird der erste Wechselspannungsanschluss 5 mittels des vierten leistungselektronischen Schalters 728 mit dem vierten Verbindungspunkt 720 elektrisch verbunden (und mittels der leistungselektronischen Schalter 424, 724 und 428 von den Verbindungspunkten 412, 716 und 416 elektrisch getrennt). Jedem leistungselektronischen Schalter 424, 724, 728 und 428 ist dabei ein Spannungsbereich der Wechselspannung zugeordnet. Diese Spannungsbereiche sind nichtüberlappende Spannungsbereiche. Wenn der Augenblickswert der an dem Wechselspannungsanschluss 5 anliegenden Spannung in einem der Spannungsbereiche liegt, dann schließt der zugeordnete leistungselektronische Schalter und verbindet den ersten Wechselspannungsanschluss 5 mit dem jeweiligen Verbindungspunkt. Der Wechselspannungsanschluss 5 ist dann von den anderen Verbindungspunkten elektrisch getrennt.

Der erste vorgewählte Spannungsbereich kann zum Beispiel der Spannungsbereich zwischen +1/4 U_{dc} und +1/2 U_{dc} sein; der zweite vorgewählte Spannungsbereich kann zum Beispiel der Spannungsbereich zwischen 0 und +1/4 U_{dc} sein; der dritte vorgewählte Spannungsbereich kann zum Beispiel der Spannungsbereich zwischen -1/4 U_{dc} und 0 sein; der vierte vorgewählte Spannungsbereich kann zum Beispiel der Spannungsbereich zwischen -1/2 U_{dc} und -1/4 U_{dc} sein.

Das Phasenmodul 700 ermöglicht eine noch flexiblere Zuordnung der Module der einzelnen Teilzweige zu dem ersten Phasenmodulzweig 11 oder zu dem zweiten Phasenmodulzweig 13. Dadurch können diese Module noch differenzierter entweder dem ersten Phasenmodulzweig 11 oder dem zweiten Phasenmodulzweig 13 zugeschaltet werden.

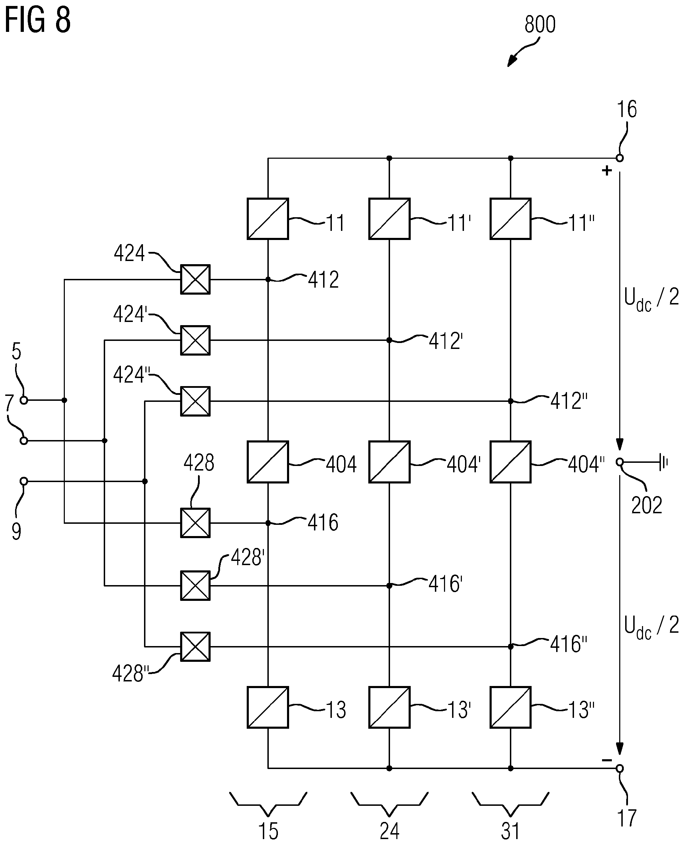

In Figur 8 ist ein Ausführungsbeispiel eines Multilevelstromrichters 800 dargestellt. Dieser dreiphasige Multilevelstromrichter 800 weist drei Phasenmodule gemäß der Figur 6 auf.

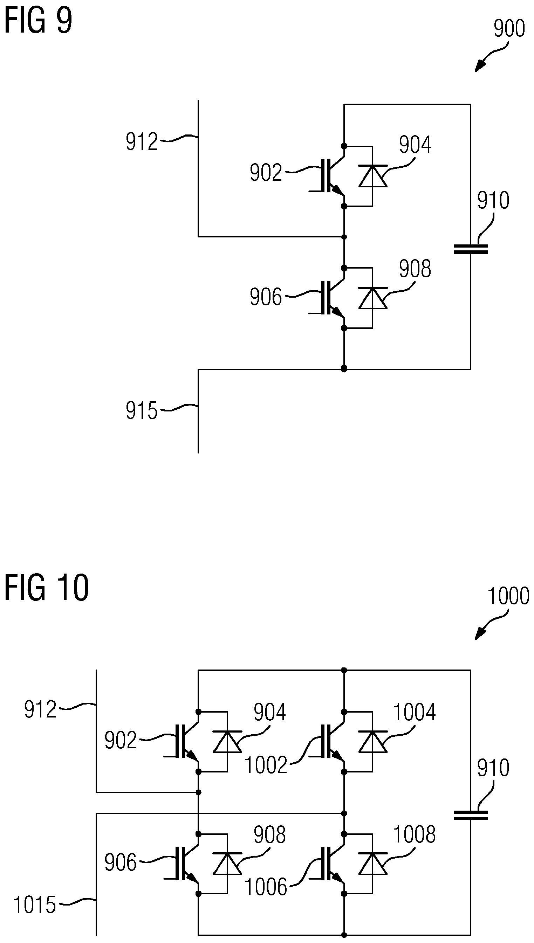

In Figur 9 ist ein Ausführungsbeispiel eines Moduls 900 des Multilevelstromrichters dargestellt. Dabei kann es sich beispielsweise um eines der Module der in den Figuren 4 oder 7 dargestellten Phasenmodule handeln.

Das Modul 900 ist als ein Halbbrücken-Modul 900 ausgestaltet. Das Modul 900 weist ein erstes (abschaltbares) elektronisches Schaltelement 902 (erstes abschaltbares Halbleiterventil 902) mit einer ersten antiparallel geschalteten Diode 904 auf. Weiterhin weist das Modul 900 ein zweites (abschaltbares) elektronisches Schaltelement 906 (zweites abschaltbares Halbleiterventil 906) mit einer zweiten antiparallel geschalteten Diode 908 sowie einen elektrischen Energiespeicher 910 in Form eines Kondensators 910 auf. Das erste elektronische Schaltelement 902 und das zweite elektronische Schaltelement 906 sind jeweils als ein IGBT (insulated-gate bipolar transistor) ausgestaltet. Das erste elektronische Schaltelement 902 ist elektrisch in Reihe geschaltet mit dem zweiten elektronischen Schaltelement 906. Am Verbindungspunkt zwischen den beiden elektronischen Schaltelementen 902 und 906 ist ein erster galvanischer Modulanschluss 912 angeordnet. An dem Anschluss des zweiten elektronischen Schaltelements 906, welcher dem Verbindungspunkt gegenüberliegt, ist ein zweiter galvanischer Modulanschluss 915 angeordnet. Der zweite Modulanschluss 915 ist weiterhin mit einem ersten Anschluss des Energiespeichers 910 elektrisch verbunden; ein zweiter Anschluss des Energiespeichers 910 ist elektrisch verbunden mit dem Anschluss des ersten elektronischen Schaltelements 902, der dem Verbindungspunkt gegenüberliegt.

Der Energiespeicher 910 ist also elektrisch parallel geschaltet zu der Reihenschaltung aus dem ersten elektronischen Schaltelement 902 und dem zweiten elektronischen Schaltelement 906. Durch entsprechende Ansteuerung des ersten elektronischen Schaltelements 902 und des zweiten elektronischen Schaltelements 906 durch eine (nicht dargestellte) elektronische Steuereinrichtung des Stromrichters kann erreicht werden, dass zwischen dem ersten Modulanschluss 912 und dem zweiten Modulanschluss 915 entweder die Spannung des Energiespeichers 910 ausgegeben wird oder keine Spannung ausgegeben wird (d.h. eine Nullspannung ausgegeben wird). Durch Zusammenwirken der Module der einzelnen Phasenmodulzweige kann so die jeweils gewünschte Ausgangsspannung des Stromrichters erzeugt werden.

In Figur 10 ist ein weiteres Ausführungsbeispiel eines Moduls 1000 des Multilevelstromrichters dargestellt. Bei diesem Modul 301 kann es sich beispielsweise um das Modul 408 1 des in Figur 4 dargestellten Phasenmoduls 400 (oder auch um eines der anderen Module des Multilevelstromrichters) handeln. Neben den bereits aus Figur 9 bekannten ersten elektronischen Schaltelement 902, zweiten elektronischen Schaltelement 906, erster Freilaufdiode 904, zweiter Freilaufdiode 908 und Energiespeicher 910 weist das in Figur 10 dargestellte Modul 1000 ein drittes elektronisches Schaltelement 1002 mit einer antiparallel geschalteten dritten Freilaufiode 1004 sowie ein viertes elektronisches Schaltelement 1006 mit einer vierten antiparallel geschalteten Freilaufdiode 1008 auf. Das dritte elektronische Schaltelement 1002 und das vierte elektronische Schaltelement 1006 sind jeweils als ein IGBT ausgestaltet. Im Unterschied zur Schaltung der Figur 9 ist der zweite Modulanschluss 1015 nicht mit dem zweiten elektronischen Schaltelement 906 elektrisch verbunden, sondern mit einem Mittelpunkt einer elektrischen Reihenschaltung aus dem dritten elektronischen Schaltelement 1002 und dem vierten elektronischen Schaltelement 1006.

Das Modul 1000 der Figur 10 ist ein sogenanntes Vollbrücken-Modul 1000. Dieses Vollbrücken-Modul 1000 zeichnet sich dadurch aus, dass bei entsprechender Ansteuerung der vier elektronischen Schaltelemente zwischen dem ersten (galvanischen) Modulanschluss 912 und dem zweiten (galvanischen) Modulanschluss 1015 wahlweise entweder die positive Spannung des Energiespeichers 910, die negative Spannung des Energiespeichers 910 oder eine Spannung des Wertes Null (Nullspannung) ausgegeben werden kann. Somit kann also mittels des Vollbrückenmoduls 1000 die Polarität der Ausgangsspannung umgekehrt werden. Der Multilevelstromrichter kann entweder nur Halbbrücken-Module 900, nur Vollbrücken-Module 1000 oder auch Halbbrücken-Module 900 und Vollbrücken-Module 1000 aufweisen.

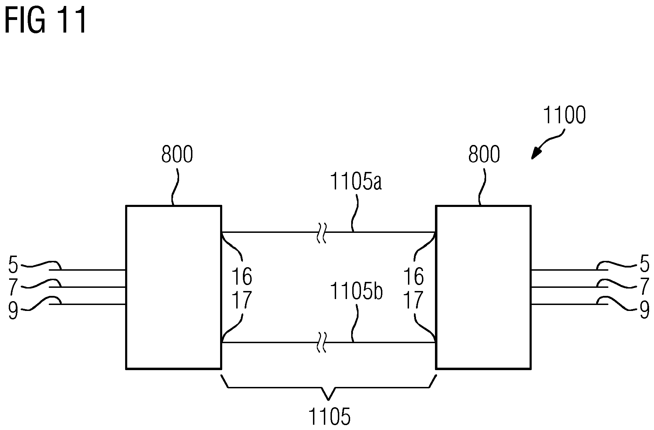

In Figur 11 ist schematisch ein Ausführungsbeispiel einer Hochspannungs-Gleichstrom-Übertragungsanlage 1100 dargestellt. Diese Hochspannungs-Gleichstrom-Übertragungsanlage 1100 weist zwei Stromrichter 800 auf, wie sie in Figur 8 dargestellt sind. Diese beiden Stromrichter 800 sind gleichspannungsseitig über eine Hochspannungs-Gleichstrom-Verbindung 1105 elektrisch miteinander verbunden. Dabei sind die beiden positiven Gleichspannungsanschlüsse 16 der Stromrichter 800 mittels einer ersten Hochspannungs-Gleichstrom-Leitung 1105a elektrisch miteinander verbunden; die beiden negativen Gleichspannungsanschlüsse 17 der beiden Stromrichter 800 sind mittels einer zweiten Hochspannungs-Gleichstrom-Leitung 1105b elektrisch miteinander verbunden. Mittels einer derartigen Hochspannungs-Gleichstrom-Übertragungsanlage 1100 kann elektrische Energie über weite Entfernungen übertragen werden; die Hochspannungs-Gleichstrom-Verbindung 1105 weist dann eine entsprechende Länge auf. In Figur 11 ist beispielhaft eine als symmetrischer Monopol ausgestaltete Hochspannungs-Gleichstrom-Übertragungsanlage 1100 dargestellt. Aber natürlich kann der Stromrichter auch in anderen Hochspannungs-Gleichstrom-Übertragungsanlagen eingesetzt werden, zum Beispiel in Bipol-Anlagen.

Zum Betrieb eines Multilevelstromrichters gemäß der Figur 8 wird also der Augenblickswert der an dem Wechselspannungsanschluss 5 des Multilevelstromrichters anliegenden Spannung gemessen. In Abhängigkeit von dem gemessenen Augenblickswert wird dann der Wechselspannungsanschluss 5 mit dem ersten Verbindungspunkt 412 oder dem zweiten Verbindungspunkt 416 (oder gegebenenfalls einem der weiteren Verbindungspunkte wie z.B. mit dem dritten Verbindungspunkt 716 oder dem vierten Verbindungspunkt 720) elektrisch verbunden. Dabei ist der Wechselspannungsanschluss 5 jeweils nur mit einem der Verbindungspunkte elektrisch verbunden; der Wechselspannungsanschluss 5 ist von den anderen Verbindungspunkten mittels der anderen leistungselektronischen Leiter elektrisch getrennt.

Im Falle eines Multilevelstromrichters mit Phasenmodulen gemäß Figur 6 wird der Wechselspannungsanschluss 5 dann mit dem ersten Verbindungspunkt 412 elektrisch verbunden, wenn der Augenblickswert der an dem Wechselspannungsanschluss 5 anliegenden Spannung größer (oder gleich) Null ist. Der Wechselspannungsanschluss 5 wird dann mit dem zweiten Verbindungspunkt 416 elektrisch verbunden, wenn der Augenblickswert der an dem Wechselspannungsanschluss anliegenden Spannung kleiner Null ist.

Bei einem Multilevelstromrichter mit Phasenmodulen gemäß Figur 7 (also bei Phasenmodulen, bei denen der dritte Phasenmodulzweig mehrere Teilzweige aufweist) wird der Wechselspannungsanschluss 5 mittels der Schalteinrichtung 732 jeweils mit dem Verbindungspunkt elektrisch verbunden, in dessen zugeordneten vorgewählten Spannungsbereich der Augenblickswert der (an dem Wechselspannungsanschluss 5 anliegenden) Wechselspannung U_{ac} liegt. Der Wechselspannungsanschluss 5 wird von den anderen Verbindungspunkten elektrisch getrennt.

Die Schalteinrichtung 420, 732 kann bei Auftreten von Fehlern auch besonders vorteilhaft zur Fehlerklärung genutzt werden. Wenn beispielsweise bei einem Multilevelstromrichter mit Phasenmodulen 400 gemäß Figur 4 auf der Gleichspannungsseite ein Kurzschluss auftritt, dann kann die Schalteinrichtung 420 in eine spezielle Schaltstellung (die hier Fehler-Schaltstellung genannt werden soll) gebracht werden, bei der die Schalteinrichtung den ersten Wechselspannungsanschluss 5 von allen Verbindungspunkten 412, 416 des Phasenmoduls elektrisch trennt. Dadurch wird der Energiefluss von dem an den Wechselspannungsanschluss des Stromrichters angeschlossenen Wechselspannungsnetz zur Stelle des gleichspannungsseitigen Fehlers unterbrochen. Diese elektrische Unterbrechung/Trennung kann sehr schnell erfolgen. Insbesondere wenn die Schalteinrichtung mit Thyristoren ausgestattet ist, kann das Überführen in die Fehler-Schaltstellung einfach dadurch erfolgen, dass die Ansteuersignale für die Thyristoren abgeschaltet werden, worauf die Thyristoren beim nächstfolgenden Nulldurchgang der Wechselspannung in ihre Sperrstellung übergehen. Dadurch kann der Wechselstrom sehr schnell abgeschaltet werden.

Es wurden ein Multilevelstromrichter und ein Verfahren zum Betrieb des Multilevelstromrichters beschrieben, bei denen im Vergleich zu einem herkömmlichen Multilevelstromrichter eine geringere Anzahl an Modulen ausreichend ist. Dadurch können Kosten und Bauraum gespart sowie die in den Schaltelementen der Module auftretende Verlustleistung reduziert werden.

Es wurde eine Möglichkeit der Kombination von einem Multilevelstromrichter mit Thyristorventilen/Thyristorschaltern beschrieben. Diese neuartige Stromrichtertopologie ermöglicht eine Reduzierung der Reihenschaltzahl der Module in den Phasenmodulen. Dabei werden antiparallele Thyristorventile eingesetzt, um die an den einzelnen Phasenmodulzweigen jeweils auftretende maximale Spannung zu reduzieren. Beispielsweise ist es bei Nutzung eines dritten Phasenmodulzweigs möglich, die Spannung von 200% U_{dc} auf 150% U_{dc} zu reduzieren.

Im Vergleich zu der bekannten Ausführung von Phasenmodulen (welche lediglich einen ersten positivseitigen Phasenmodulzweig und einem zweiten negativseitigen Phasenmodulzweig aufweisen) erfolgt bei dem neuartigen Phasenmodul eine Unterteilung des Phasenmoduls in drei Phasenmodulzweige: dabei bildet ein erster Phasenmodulzweig einen positivseitigen Phasenmodulzweig, ein zweiter Phasenmodulzweig einen negativseitigen Phasenmodulzweig und ein dritter Phasenmodulzweig einen mittleren Phasenmodulzweig. Die antiparallelen Thyristorventile ermöglichen es dabei, die von einem Phasenmodulzweig gestellte Spannung von 100% U_{dc} auf 50% U_{dc} zu begrenzen. Damit verringert sich die notwendige Stromrichterleistung von zweimal 100% auf dreimal 50%. Dies entspricht einer Einsparung von 25% benötigter Leistung. Dies kann in einer Einsparung von 25% der benötigten Module resultieren.

Ein zusätzlicher Vorteil ergibt sich dadurch, dass durch die Thyristorventile/Thyristorschalter Fehlerfälle schneller geklärt werden können im Vergleich zur Fehlerklärung mit einem wechselspannungsseitig des Multilevelstromrichters angeordneten Leistungsschalter. Dadurch kann die Belastung des Multilevelstromrichters im Fehlerfall reduziert werden.

Nach Auslösung eines Schutzbefehls zur Fehlerklärung wird der Zündimpuls der Thyristoren abgeschaltet. Daraufhin sperren die Thyristoren, so dass der fließende Wechselstrom schnell gegen Null geht. Dies erfolgt innerhalb weniger Millisekunden. Im Unterschied dazu benötigt ein konventioneller wechselstromseitiger Leistungsschalter Schaltzeiten zwischen ca. 2,5 bis 3 Periodendauern, also zwischen ca. 50 ms bis 60 ms bei einer Frequenz des Wechselstroms von 50 Hz. Mittels der beschriebenen Schalteinrichtung kann also der Fehler deutlich schneller geklärt werden als durch einen herkömmlichen wechselstromseitigen AC-Leistungsschalter.

Die Thyristoren weisen außerdem im Vergleich zu den Modulen mit IGBT-Schaltelementen deutlich geringere Durchlassverluste (einen kleineren Verlust pro Bauelement), höhere Sperrspannungen (bedingen eine geringere Reihenschaltzahl zum Erreichen der gleichen Spannung) und dadurch geringere Kosten auf. Der Mehraufwand für die zusätzlichen Thyristorventile wird also durch die Einsparung bei den Modulen mehr als kompensiert.

Der beschriebene Multilevelstromrichter und das beschriebene Verfahren lassen sich für die unterschiedlichsten Anlagentypen einsetzen, beispielsweise für die Hochspannungsgleichstromübertragung mittels Erdkabel oder mittels Freileitungen.

## Patentansprüche

1. Multilevelstromrichter (800) mit einem Phasenmodul (400), welches zwischen einem ersten Gleichspannungsanschluss (16) und einem zweiten Gleichspannungsanschluss (17) des Multilevelstromrichters angeordnet ist und welches eine Vielzahl von Modulen (1_1...1_n; 2_1 ... 2_n) aufweist, wobei das Phasenmodul (400) einen ersten Phasenmodulzweig (11) aufweist, der mit dem ersten Gleichspannungsanschluss (16) verbunden ist, und einen zweiten Phasenmodulzweig (13) aufweist, der mit dem zweiten Gleichspannungsanschluss (17) verbunden ist, und wobei die Module (1_1...1_n; 2_1 ... 2_n) jeweils mindestens zwei elektronische Schaltelemente (902, 906) und einen elektrischen Energiespeicher (910) aufweisen, mit einem dritten Phasenmodulzweig (404), der den ersten Phasenmodulzweig (11) mit dem zweiten Phasenmodulzweig (13) verbindet, und einer Schalteinrichtung (420), welche in einer ersten Schaltstellung einen Wechselspannungsanschluss (5) des Phasenmoduls (400) mit einem ersten Verbindungspunkt (412) zwischen dem ersten Phasenmodulzweig (11) und dem dritten Phasenmodulzweig (404) verbindet und in einer zweiten Schaltstellung den Wechselspannungsanschluss (5) mit einem zweiten Verbindungspunkt (416) zwischen dem dritten Phasenmodulzweig (404) und dem zweiten Phasenmodulzweig (13) verbindet,
und wobei der Multilevelstromrichter drei derartige Phasenmodule aufweist,
**dadurch gekennzeichnet, dass** die Schalteinrichtung (420) einen ersten leistungselektronischen Schalter (424) und einen zweiten leistungselektronischen Schalter (428) aufweist, wobei der erste leistungselektronische Schalter (424) antiparallel geschaltete Thyristoren (T1, T2) aufweist und der zweite leistungselektronische Schalter (428) antiparallel geschaltete Thyristoren (T3, T4) aufweist.

2. Multilevelstromrichter nach Anspruch 1,
**dadurch gekennzeichnet, dass**
- die Schalteinrichtung (420) in der zweiten Schaltstellung den Wechselspannungsanschluss (5) von dem ersten Verbindungspunkt (412) trennt und in der ersten Schaltstellung den Wechselspannungsanschluss (5) von dem zweiten Verbindungspunkt (416) trennt.

3. Multilevelstromrichter nach Anspruch 1 oder 2,
**dadurch gekennzeichnet, dass**
- der erste Phasenmodulzweig (11), der zweite Phasenmodulzweig (13) und der dritte Phasenmodulzweig (404) jeweils mindestens zwei der Module (1_1 ... 1_n; 2_1 ... 2_n; 408_1 ... 408_n), insbesondere jeweils mindestens fünf der Module, in einer Reihenschaltung aufweisen.

4. Multilevelstromrichter nach einem der vorhergehenden Ansprüche,
**dadurch gekennzeichnet, dass**
- der erste leistungselektronische Schalter (424) bei der ersten Schaltstellung der Schalteinrichtung (420) den Wechselspannungsanschluss (5) mit dem ersten Verbindungspunkt (412) verbindet und bei der zweiten Schaltstellung der Schalteinrichtung (420) den Wechselspannungsanschluss (5) von dem ersten Verbindungspunkt (412) trennt und
- der zweite leistungselektronische Schalter (428) bei der zweiten Schaltstellung der Schalteinrichtung (420) den Wechselspannungsanschluss (5) mit dem zweiten Verbindungspunkt (416) verbindet und bei der ersten Schaltstellung der Schalteinrichtung (420) den Wechselspannungsanschluss (5) von dem zweiten Verbindungspunkt (416) trennt.

5. Multilevelstromrichter nach einem der vorhergehenden Ansprüche,
**dadurch gekennzeichnet, dass**
- mindestens ein Modul des dritten Phasenmodulzweigs so ausgestaltet ist, dass es eine Spannung positiver oder negativer Polarität auszugeben imstande ist.

6. Multilevelstromrichter nach einem der vorhergehenden Ansprüche,
**dadurch gekennzeichnet,dass**
- mindestens ein Modul (408_1) des dritten Phasenmodulzweigs (404) eine Vollbrückenschaltung aufweist.

7. Multilevelstromrichter nach Anspruch 6,
**dadurch gekennzeichnet,dass**
- die Vollbrückenschaltung vier elektronische Schaltelemente (902, 906, 1002, 1006) und einen elektrischen Energiespeicher (910) aufweist.

8. Multilevelstromrichter nach einem der vorhergehenden Ansprüche,
**dadurch gekennzeichnet, dass**
- der dritte Phasenmodulzweig (404) mehrere elektrisch in Reihe geschaltete Teilzweige (704, 708, 712) aufweist, und die Schalteinrichtung (732) eine dritte Schaltstellung aufweist, bei der der Wechselspannungsanschluss (5) mit einem dritten Verbindungspunkt (716) zweier Teilzweige (704, 708) verbunden ist.

9. Multilevelstromrichter nach einem der vorhergehenden Ansprüche,
**dadurch gekennzeichnet, dass**
- die Schalteinrichtung (420, 732) die Schaltstellungen in Abhängigkeit von dem Augenblickswert der an dem Wechselspannungsanschluss (5) anliegenden Spannung einnimmt.

10. Multilevelstromrichter nach einem der vorhergehenden Ansprüche,
**dadurch gekennzeichnet, dass**
- die Schalteinrichtung (420) die erste Schaltstellung einnimmt, wenn der Augenblickswert der an dem Wechselspannungsanschluss (5) anliegenden Spannung größer Null ist, und die Schalteinrichtung (420) die zweite Schaltstellung einnimmt, wenn der Augenblickswert der an dem Wechselspannungsanschluss (5) anliegenden Spannung kleiner Null ist, oder
- die Schalteinrichtung (420) die erste Schaltstellung einnimmt, wenn der Augenblickswert der an dem Wechselspannungsanschluss (5) anliegenden Spannung in einem ersten vorgewählten Spannungsbereich liegt, und die Schalteinrichtung (420) die zweite Schaltstellung einnimmt, wenn der Augenblickswert der an dem Wechselspannungsanschluss (5) anliegenden Spannung in einem zweiten vorgewählten Spannungsbereich liegt.

11. Hochspannungs-Gleichstrom-Übertragungsanlage (1100) mit einem Stromrichter (800) nach einem der Ansprüche 1 bis 10.

12. Verfahren zum Betreiben eines Multilevelstromrichters (800) mit einem Phasenmodul (400), welches zwischen einem ersten Gleichspannungsanschluss (16) und einem zweiten Gleichspannungsanschluss (17) des Multilevelstromrichters angeordnet ist und welches eine Vielzahl von Modulen (1_1...1_n; 2_1 ... 2_n) aufweist, wobei das Phasenmodul (400) einen ersten Phasenmodulzweig (11) aufweist, der mit dem ersten Gleichspannungsanschluss (16) verbunden ist, einen zweiten Phasenmodulzweig (13) aufweist, der mit dem zweiten Gleichspannungsanschluss (17) verbunden ist, und einen dritten Phasenmodulzweig (404) aufweist, der den ersten Phasenmodulzweig (11) mit dem zweiten Phasenmodulzweig (13) verbindet, und wobei der Multilevelstromrichter drei derartige Phasenmodule aufweist, wobei bei dem Verfahren
- ein Augenblickswert der an einem Wechselspannungsanschluss (5) des einen Phasenmoduls (400) anliegenden Spannung gemessen wird, und
- in Abhängigkeit von dem gemessenen Augenblickswert der Wechselspannungsanschluss (5) mit einem ersten Verbindungspunkt (412) zwischen dem ersten Phasenmodulzweig (11) und dem dritten Phasenmodulzweig (404) des einen Phasenmoduls (400) oder mit einem zweiten Verbindungspunkt zwischen dem dritten Phasenmodulzweig (404) und dem zweiten Phasenmodulzweig (13) des einen Phasenmoduls (400) verbunden wird, wobei der Wechselspannungsanschluss (5) mit dem ersten Verbindungspunkt (412) oder dem zweiten Verbindungspunkt (416) verbunden wird mittels einer Schalteinrichtung (420), die einen ersten leistungselektronischen Schalter (424) und einen zweiten leistungselektronischen Schalter (428) aufweist, wobei der erste leistungselektronische Schalter (424) antiparallel geschaltete Thyristoren (T1, T2) aufweist und der zweite leistungselektronische Schalter (428) antiparallel geschaltete Thyristoren (T3, T4) aufweist.

13. Verfahren nach Anspruch 12,
**dadurch gekennzeichnet, dass**
- mittels der Schalteinrichtung (420) in deren ersten Schaltstellung der Wechselspannungsanschluss (5) mit dem ersten Verbindungspunkt (412) verbunden wird und der Wechselspannungsanschluss (5) von dem zweiten Verbindungspunkt (416) getrennt wird, und
- mittels der Schalteinrichtung (420) in deren zweiten Schaltstellung der Wechselspannungsanschluss (5) mit dem zweiten Verbindungspunkt (416) verbunden wird und der Wechselspannungsanschluss (5) von dem ersten Verbindungspunkt (412) getrennt wird.

14. Verfahren nach Anspruch 12 oder 13,
**dadurch gekennzeichnet, dass**
- der Wechselspannungsanschluss (5) mit dem ersten Verbindungspunkt (412) verbunden wird, wenn der Augenblickswert der an dem Wechselspannungsanschluss (5) anliegenden Spannung größer Null ist, und der Wechselspannungsanschluss (5) mit dem zweiten Verbindungspunkt (416) verbunden wird, wenn der Augenblickswert der an dem Wechselspannungsanschluss (5) anliegenden Spannung kleiner Null ist, oder
- der Wechselspannungsanschluss (5) mit dem ersten Verbindungspunkt (412) verbunden wird, wenn der Augenblickswert der an dem Wechselspannungsanschluss (5) anliegenden Spannung in einem ersten vorgewählten Spannungsbereich liegt und der Wechselspannungsanschluss (5) mit dem zweiten Verbindungspunkt (416) verbunden wird, wenn der Augenblickswert der an dem Wechselspannungsanschluss (5) anliegenden Spannung in einem zweiten vorgewählten Spannungsbereich liegt.

15. Verfahren nach einem der Ansprüche 12 bis 14,
**dadurch gekennzeichnet, dass**
- der dritte Phasenmodulzweig (404) mehrere elektrisch in Reihe geschaltete Teilzweige (704, 708, 712) aufweist, zwischen denen mindestens ein weiterer Verbindungspunkt (716) besteht, wobei in Abhängigkeit von dem gemessenen Augenblickswert der Wechselspannungsanschluss (5) mit dem ersten Verbindungspunkt (11), mit dem zweiten Verbindungspunkt (13) oder mit dem weiteren Verbindungspunkt (716) verbunden wird.

16. Verfahren nach einem der Ansprüche 12 bis 15,
**dadurch gekennzeichnet, dass**
- bei Auftreten eines Fehlers, insbesondere bei Auftreten eines Kurzschlusses, der Wechselspannungsanschluss (5) mittels der Schalteinrichtung (420) von dem Phasenmodul (400) getrennt wird.

## Claims

1. Multilevel power converter (800) having a phase module (400), which is arranged between a first DC voltage terminal (16) and a second DC voltage terminal (17) of the multilevel power converter and which comprises a plurality of modules (1_1 ... 1_n; 2_1 ... 2_n), wherein the phase module (400) comprises a first phase module branch (11), which is connected to the first DC voltage terminal (16), and a second phase module branch (13), which is connected to the second DC voltage terminal (17), and wherein the modules (1_1 ... 1_n; 2_1 ... 2_n) respectively comprise at least two electronic switching elements (902, 906) and an electrical energy store (910), having a third phase module branch (404), which connects the first phase module branch (11) to the second phase module branch (13), and a switching device (420), which, in a first switch position, connects an AC voltage terminal (5) of the phase module (400) to a first connection point (412) between the first phase module branch (11) and the third phase module branch (404) and, in a second switch position, connects the AC voltage terminal (5) to a second connection point (416) between the third phase module branch (404) and the second phase module branch (13),
and wherein the multilevel power converter comprises three phase modules of this type,
**characterized in that**
the switching device (420) comprises a first power electronics switch (424) and a second power electronics switch (428), wherein the first power electronics switch (424) comprises antiparallel-connected thyristors (T1, T2) and the second power electronics switch (428) comprises antiparallel-connected thyristors (T3, T4).

2. Multilevel power converter according to Claim 1, **characterized in that**
- the switching device (420), in the second switch position, isolates the AC voltage terminal (5) from the first connection point (412) and, in the first switch position, isolates the AC voltage terminal (5) from the second connection point (416).

3. Multilevel power converter according to Claim 1 or 2, **characterized in that**
- the first phase module branch (11), the second phase module branch (13) and the third phase module branch (404) comprise at least two of the modules (1_1 ... 1_n; 2_1 ... 2_n; 408_1 ... 408_n) respectively, and specifically at least five of the modules respectively, in a series-connected arrangement.

4. Multilevel power converter according to one of the preceding claims,
**characterized in that**
- the first power electronics switch (424), in the first switch position of the switching device (420), connects the AC voltage terminal (5) to the first connection point (412) and, in the second switch position of the switching device (420), isolates the AC voltage terminal (5) from the first connection point (412), and
- the second power electronics switch (428), in the second switch position of the switching device (420), connects the AC voltage terminal (5) to the second connection point (416) and, in the first switch position of the switching device (420), isolates the AC voltage terminal (5) from the second connection point (416).

5. Multilevel power converter according to one of the preceding claims,
**characterized in that**
- at least one module of the third phase module branch is configured to deliver a voltage output with a positive or a negative polarity.

6. Multilevel power converter according to one of the preceding claims,
**characterized in that**
- at least one module (408_1) of the third phase module branch (404) comprises a full-bridge circuit.

7. Multilevel power converter according to Claim 6, **characterized in that**
- the full-bridge circuit comprises four electronic switching elements (902, 906, 1002, 1006) and an electrical energy store (910) .

8. Multilevel power converter according to one of the preceding claims,
**characterized in that**
- the third phase module branch (404) comprises a plurality of electrically series-connected sub-branches (704, 708, 712), and the switching device (732) comprises a third switch position, wherein the AC voltage terminal (5) is connected to a third connection point (716) of two sub-branches (704, 708).

9. Multilevel power converter according to one of the preceding claims,
**characterized in that**
- the switching device (420, 732) assumes the switch positions in accordance with the instantaneous value of the voltage which is present on the AC voltage terminal (5).

10. Multilevel power converter according to one of the preceding claims,
**characterized in that**
- the switching device (420) assumes the first switch position if the instantaneous value of the voltage which is present on the AC voltage terminal (5) is greater than zero, and the switching device (420) assumes the second switch position if the instantaneous value of the voltage which is present on the AC voltage terminal (5) is lower than zero, or
- the switching device (420) assumes the first switch position if the instantaneous value of the voltage which is present on the AC voltage terminal (5) lies within a first preselected voltage range, and the switching device (420) assumes the second switch position if the instantaneous value of the voltage which is present on the AC voltage terminal (5) lies within a second preselected voltage range.

11. High-voltage direct current transmission installation (1100) having a power converter (800) according to one of Claims 1 to 10.

12. Method for operating a multilevel power converter (800) having a phase module (400), which is arranged between a first DC voltage terminal (16) and a second DC voltage terminal (17) of the multilevel power converter and which comprises a plurality of modules (1_1 ... 1_n; 2_1 ... 2_n), wherein the phase module (400) comprises a first phase module branch (11), which is connected to the first DC voltage terminal (16), a second phase module branch (13), which is connected to the second DC voltage terminal (17), and a third phase module branch (404), which connects the first phase module branch (11) to the second phase module branch (13), and wherein the multilevel power converter comprises three phase modules of this type, wherein, according to the method
- an instantaneous value of the voltage which is present on an AC voltage terminal (5) of the one phase module (400) is measured, and
- depending upon the measured instantaneous value, the AC voltage terminal (5) is connected to a first connection point (412) between the first phase module branch (11) and the third phase module branch (404) of the one phase module (400), or to a second connection point between the third phase module branch (404) and the second phase module branch (13) of the one phase module (400), wherein the AC voltage terminal (5) is connected to the first connection point (412) or to the second connection point (416) by means of a switching device (420), which comprises a first power electronics switch (424) and a second power electronics switch (428), wherein the first power electronics switch (424) comprises antiparallel-connected thyristors (T1, T2) and the second power electronics switch (428) comprises antiparallel-connected thyristors (T3, T4).

13. Method according to Claim 12,
**characterized in that**
- by means of the switching device (420), in the first switch position thereof, the AC voltage terminal (5) is connected to the first connection point (412) and the AC voltage terminal (5) is isolated from the second connection point (416), and
- by means of the switching device (420), in the second switch position thereof, the AC voltage terminal (5) is connected to the second connection point (416) and the AC voltage terminal (5) is isolated from the first connection point (412).

14. Method according to Claim 12 or 13,
**characterized in that**
- the AC voltage terminal (5) is connected to the first connection point (412) if the instantaneous value of the voltage which is present on the AC voltage terminal (5) is greater than zero, and the AC voltage terminal (5) is connected to the second connection point (416) if the instantaneous value of the voltage which is present on the AC voltage terminal (5) is lower than zero, or
- the AC voltage terminal (5) is connected to the first connection point (412) if the instantaneous value of the voltage which is present on the AC voltage terminal (5) lies within a first preselected voltage range and the AC voltage terminal (5) is connected to the second connection point (416) if the instantaneous value of the voltage which is present on the AC voltage terminal (5) lies within a second preselected voltage range.

15. Method according to one of Claims 12 to 14,
**characterized in that**
- the third phase module branch (404) comprises a plurality of electrically series-connected sub-branches (704, 708, 712), between which at least one further connection point (716) is provided, wherein, depending upon the measured instantaneous value, the AC voltage terminal (5) is connected to the first connection point (11), to the second connection point (13) or to the further connection point (716).

16. Method according to one of Claims 12 to 15,
**characterized in that**
- in the event of the occurrence of a fault, specifically the occurrence of a short-circuit, the AC voltage terminal (5) is isolated from the phase module (400) by means of the switching device (420).

## Revendications

1. Onduleur (800) à plusieurs niveaux comprenant un module (400) de phase, qui est monté entre une première borne (16) de tension continue et une deuxième borne (17) de tension continue de l'onduleur à plusieurs niveaux et qui a une pluralité de modules (1_1...1_n ; 2_1 ... 2_n), le module (400) de phase ayant une première branche (11) de modules de phase, qui est reliée à la première borne (16) de tension continue, et une deuxième branche (13) de modules de phase, qui est reliée à la deuxième borne (17) de tension continue, et dans lequel les modules (1_1...1_n ; 2_1 ... 2_n) ont chacun au moins deux éléments (902, 906) électroniques de coupure et un accumulateur (910) d'énergie électrique, comprenant une troisième branche (404) de modules de phase, qui relie la première branche (11) de modules de phase à la deuxième branche (13) de modules de phase, et un dispositif (420) de commutation, qui, dans une première position de commutation, relie une borne (5) de tension alternative du module (400) de phase à un premier point (412) de liaison entre la première branche (11) du module de phase et la troisième branche (404) du module de phase et, dans une deuxième position de commutation, relie la borne (5) de tension alternative à un deuxième point (416) de liaison entre la troisième branche (404) du module de phase et la deuxième branche (13) du module de phase
et dans lequel l'onduleur a plusieurs niveaux à trois modules de phase de ce genre,
**caractérisé en ce que**
le dispositif (420) de commutation a un premier interrupteur (424) électronique de puissance et un deuxième interrupteur (428) électronique de puissance, le premier interrupteur (424) électronique de puissance ayant des thyristors (T1, T2) montés tête bêche et le deuxième interrupteur (428) électronique de puissance ayant des thyristors (T3, T4) montés tête bêche.

2. Onduleur à plusieurs niveaux suivant la revendication 1, **caractérisé en ce que**
- le dispositif (420) de commutation sépare, dans la deuxième position de commutation, la borne (5) de tension alternative du premier point (412) de liaison et, dans la première position de commutation, sépare la borne (5) de tension alternative du deuxième point (416) de liaison.

3. Onduleur à plusieurs niveaux suivant la revendication 1 ou 2, **caractérisé en ce que**
- la première branche (11) de modules de phase, la deuxième branche (13) de modules de phase et la troisième branche (404) de modules de phase, ont chacune au moins deux des modules (1_1...1_n ; 2_1 ... 2_n ; 408_1 ... 408_n), notamment chacune au moins cinq des modules, en un circuit en série.

4. Onduleur à plusieurs niveaux suivant l'une des revendications précédentes
**caractérisé en ce que**
le premier interrupteur (424) électronique de puissance relie, dans la première position de commutation du dispositif (420) de commutation, la borne (5) de tension alternative au premier point (412) de liaison et, dans la deuxième position de commutation du dispositif (420) de commutation, sépare la borne (5) de tension alternative du premier point (421) de liaison et
- le deuxième interrupteur (428) électronique de puissance relie, dans la deuxième position de commutation du dispositif (420) de commutation, la borne (5) de tension alternative au deuxième point (416) de liaison et, dans la première position de commutation du dispositif (420) de commutation, sépare la borne (5) de tension alternative du deuxième point (416) de liaison.

5. Onduleur à plusieurs niveaux suivant l'une des revendications précédentes, **caractérisé en ce que**
- au moins un module de la troisième branche de modules de phase est conformé de manière à être en mesure de donner une tension de polarité positive ou négative.

6. Onduleur à plusieurs niveaux suivant l'une des revendications précédentes, **caractérisé en ce que**
- un module (408_1) de la troisième branche (404) de modules de phase a un circuit à pont complet.

7. Onduleur à plusieurs niveaux suivant la revendication 6, **caractérisé en ce que**
- le circuit à pont complet a quatre éléments (902, 906, 1002, 1006) électroniques de coupure et un accumulateur (910) d'énergie électrique.

8. Onduleur à plusieurs niveaux suivant l'une des revendications précédentes, **caractérisé en ce que**
- la troisième branche (404) de modules de phase a plusieurs branches (704, 708, 712) partielles montées en série électriquement et le dispositif (732) de commutation a une troisième position de commutation, dans laquelle la borne (5) de tension alternative est reliée à un troisième point (716) de liaison de deux branches (704, 708) partielles.

9. Onduleur à plusieurs niveaux suivant l'une des revendications précédentes **caractérisé en ce que**
- le dispositif (420, 732) de commutation prend des positions de commutation en fonction de la valeur instantanée s'appliquant à la borne (5) de tension alternative.

10. Onduleur à plusieurs niveaux suivant l'une des revendications précédentes, **caractérisé en ce que**
- le dispositif (420) de commutation prend la première position de commutation si la valeur instantanée de la tension s'appliquant à la borne (5) de tension alternative est plus grande que zéro, et le dispositif (420) de commutation prend la deuxième position de commutation, si la valeur instantanée de la tension s'appliquant à la borne (5) de tension alternative est plus petite que zéro, ou
- le dispositif (420) de commutation prend la première position de commutation, si la valeur instantanée de la tension s'appliquant à la borne (5) de tension alternative, se trouve dans une première plage de tension sélectionnée à l'avance et le dispositif (420) de commutation prend la deuxième position de commutation, si la valeur instantanée de la tension s'appliquant à la borne (5) de tension alternative, se trouve dans une deuxième plage de tension sélectionnée à l'avance.

11. Installation (1100) de transport de courant continu sous haute tension, comprenant un onduleur (800) suivant l'une des revendications 1 à 10.

12. Procédé pour faire fonctionner un onduleur (800) à plusieurs niveaux comprenant un module (400) de phase, qui est monté entre une première borne (16) de tension continue et une deuxième borne (17) de tension continue de l'onduleur à plusieurs niveaux et qui a une pluralité de modules (1_1...1_n ; 2_1 ... 2_n), le module (400) de phase ayant une première branche (11) de modules de phase, qui est reliée à la première borne (16) de tension continue, ayant une deuxième branche (13) de modules de phase, qui est reliée à la deuxième borne (17) de tension continue et ayant une troisième branche (404) de modules de phase, qui relie la première branche (11) de modules de phase à la deuxième branche (13) de modules de phase et l'onduleur à plusieurs niveaux ayant trois modules de phase de ce genre, dans lequel, dans le procédé,
- on mesure une valeur instantanée de la tension s'appliquant à une borne (5) de tension alternative du un module (400) de phase et
- en fonction de la valeur instantanée mesurée, on relie la borne (5) de tension alternative à un premier point (412) de liaison entre la première branche (11) de modules de phase et la troisième branche (404) de modules de phase du un module (400) de phase ou à un deuxième point de liaison entre la troisième branche (404) du module de phase et la deuxième branche (13) de modules de phase du un module (400) de phase, la borne (5) de tension alternative étant reliée au premier point (412) de liaison ou au deuxième point (416) de liaison au moyen d'un dispositif (420) de commutation, qui a un premier interrupteur (424) électronique de puissance et un deuxième interrupteur (428) électronique de puissance, le premier interrupteur (424) électronique de puissance ayant des thyristors (T1, T2) montés tête bêche et le deuxième interrupteur (428) électronique de puissance ayant des thyristors (T3, T4) montés tête bêche.

13. Procédé suivant la revendication 12,
**caractérisé en ce que**
- au moyen du dispositif (420) de commutation dans sa première position de commutation, on relie la borne (5) de tension alternative au premier point (412) de liaison et on sépare la borne (5) de tension alternative du deuxième point (416) de liaison, et
- au moyen du dispositif (420) de commutation dans sa deuxième position de commutation, on relie la borne (5) de tension alternative au deuxième point (416) de liaison et on sépare la borne (5) de tension alternative du premier point (412) de liaison.

14. Procédé suivant la revendication 12 ou 13,
**caractérisé en ce que**
- on relie la borne (5) de tension alternative au premier point (412) de liaison, si la valeur instantanée de la tension s'appliquant à la borne (5) de tension alternative est plus grande que zéro et on relie la borne (5) de tension alternative au deuxième point (416) de liaison, si la valeur instantanée de la tension s'appliquant à la borne (5) de tension alternative est plus petite que zéro, ou
- on relie la borne (5) de tension alternative au premier point (412) de liaison, si la valeur instantanée de la tension s'appliquant à la borne (5) de tension alternative se trouve dans une première plage de tension sélectionnée à l'avance et on relie la borne (5) de tension alternative au deuxième point (416) de liaison, si la valeur instantanée de la tension s'appliquant à la borne (5) de tension alternative, se trouve dans une deuxième plage de tension sélectionnée à l'avance.

15. Procédé suivant l'une des revendications 12 à 14,
**caractérisé en ce que**
- la troisième branche (404) de modules de phase a plusieurs branches (704, 708,712) partielles montée en série électriquement, entre lesquelles il y a au moins un autre point (716) de liaison, dans lequel, en fonction de la valeur instantanée mesurée, on relie la borne (5) de tension alternative au premier point (11) de liaison, au deuxième point (13) de liaison ou à l'autre point (716) de liaison.

16. Procédé suivant l'une des revendications 12 à 15,
**caractérisé en ce que**
- à l'apparition d'une panne, notamment à l'apparition d'un court-circuit on sépare la borne (5) de tension alternative du module (400) de phase au moyen du dispositif (420) de commutation.
